# EUROPÄISCHE PATENTSCHRIFT

(11) **EP 2 169 758 B1**
(45) Veröffentlichungstag und Bekanntmachung des Hinweises auf die Patenterteilung: **07.11.2012**
(21) Anmeldenummer: 09011513.0
(22) Anmeldetag: 08.09.2009
(51) Int. Cl.: H01M 10/44, H01M 10/48, H01M 10/0525

(54) **Nach galvanischen Prinzipien arbeitende elektrische Einrichtungen, wie beispielsweise Lithium-Ionen-Zelle, mit einer Betriebszustandssteuerung**
Electrical device operating using galvanic principles such as lithium ion cell, with operational state control
Dispositifs électriques fonctionnant selon des principes galvaniques, comme par exemple une cellule d'ions-lithium dotée d'une commande d'état de fonctionnement

(30) Priorität: 10.09.2008 DE 102008046510
(43) Veröffentlichungstag der Anmeldung: 31.03.2010
(73) Patentinhaber: Li-Tec Battery GmbH, 01917 Kamenz (DE)
(72) Erfinder: Schäfer, Tim, 99768 Harztor (DE); Gutsch, Andreas, Dr., 59348 Lüdinghausen (DE)
(74) Vertreter: Wallinger, Michael

(56) Entgegenhaltungen:
- EP-A1- 0 773 596
- EP-A2- 1 885 014
- WO-A1-2007/122787
- "A guide to the safe use of secondary lithium ion batteries in notebook-type personal computers" 20. April 2007 (2007-04-20), Japan Electronics and Information Technology Industries Association and Battery Association of Japan , XP002558314 , Seiten 1-18 * Seite 8 - Seite 11 *

## Beschreibung

Die vorliegende Erfindung betrifft eine nach galvanischen Prinzipien arbeitende Einrichtung, wie beispielsweise eine Lithium-Ionen-Zelle bzw. ein eine Vielzahl derartiger Zellen umfassender Akkumulator, welche Einrichtung mit einem Betriebsmanagementsystem ausgestattet ist, und ein Verfahren zum Steuern des Betriebszustands der Einrichtung.

Es ist üblich, herkömmliche Lithium-Ionen-Zellen bzw. Akkumulatoren nur mit einer speziellen Ladeschaltung bzw. Ladeelektronik zu laden. Eine zur Zeit übliche Ladeschaltung steuert einen ladungsabhängigen Ladestrom und kann beispielsweise die exakt einzuhaltende Ladeschlussspannung überwachen.

Weil integrierte Schaltkreise entsprechend preisgünstig geworden sind, werden Lithium-Ionen-Akkumulatoren inzwischen immer häufiger in Verbindung mit einem Betriebsmanagementsystem mit einer intelligenten Elektronikschaltung betrieben, was die Sicherheit im Betrieb dieser Akkumulatoren erheblich erhöht hat.

In praktischen Einsätzen von Lithium-Ionen-Akkumulatoren, insbesondere solchen mit hoher Kapazität, hat sich gezeigt, dass herkömmliche Maßnahmen insbesondere zur Betriebssteuerung suboptimal auf Anforderungen wie Langlebigkeit und Sicherheit der Zellen ausgelegt sind, und dass Typabhängigkeit und Einzelzellenstreuungen sowie die Benutzungsgeschichte und Betriebsbedingungen in manchen Fällen nur unzureichend berücksichtigt werden. Es besteht daher ein Bedarf, neue Lösungen zu finden, um Lithium-Ionen-Akkumulatoren langlebiger und sicherer betreiben zu können.

Die EP 1 885 014 befasst sich mit einem Verfahren und einer Einrichtung zum Laden einer Batterie bei erhöhter Temperatur. Nach dieser Schrift ist es erwünscht, Batterien sogar bei hohen Temperaturen laden. Dazu wird vorgeschlagen, die Temperatur wenigstens einer Zelle einer zu ladenden Batterie zu bestimmen und die Ladespannung, welche auf diese Batterie angewendet wird, auf eine maximale Ladespannung in Übereinstimmung mit der bestimmten Temperatur zu begrenzen.

Die WO 2007/122787 befasst sich mit einem Ladesystem, Ladesteuerung, Programm und tragbarem Terminal. Ein Ladesystem für eine Batterie ist Teil eines Mobiltelefons. Das Ladesystem weist eine Ladesteuereinheit zum Steuern eines Ladestroms, einen Gerätetemperaturüberwachungsabschnitt zum Überwachen der Gerätetemperatur in dem Mobiltelefon und einen Batterietemperaturüberwachungsabschnitt zum Überwachen der Batterietemperatur auf. Die Ladesteuereinheit steuert den Ladestrom, welcher der Batterie zugeführt wird in Übereinstimmung mit der Gerätetemperatur, welche durch den Gerätetemperaturüberwachungsabschnitt überwacht wird und steuert die Ladespannung , welche der Batterie zugeführt wird in Übereinstimmung mit der Batterietemperatur, welche durch den Batterietemperaturüberwachungsabschnitt überwacht wird.

Der "Leitfaden für den sicheren Gebrauch von Sekundär-Lithiumionen-Batterien in tragbaren Rechnern (PCs)" befasst sich dem Schutz von Batterien bei erhöhten Temperaturen. Der Ladestrom und die Ladespannung sind temperaturabhängig zu begrenzen.

A guide to the safe use of secondary lithium ion batteries in notebook-type personal computers", 20. April 2007 (2007-04-20), Japan Electronics and Information Technology Industries Association and Battery Association of Japan, Seiten 1-18.

Die EP 0 773 596 befasst sich mit einer verschlossenen, aufladbaren Batterie. Es ist eine aufladbare, gasdichte Batterie vorgeschlagen mit einem Kunststoff-Batteriebehälter, einer Elektrodengruppe, einem Temperatursensor für eine Innentemperatur der Batterie, einem Sicherheitsventil, einer Röhre, welche den Temperatursensor aufnimmt. Die Röhre hat ein geschlossenes zweites Ende, das zur Elektrodengruppe so vorsteht, dass das geschlossene Ende mit der Elektrodengruppe in Kontakt kommt, oder der Abstand zwischen dem geschlossenen Ende und dem ersten Rand der Elektrodengruppe nicht mehr als 2 mm beträgt. Der Temperatursensor weist einen Temperaturmessteil auf, der in direktem Kontakt mit der Innenfläche des geschlossenen Endes der Röhre ist.

Eine Hauptaufgabe der vorliegenden Erfindung besteht darin, galvanische Zellen, wie Lithium-lonen-Akkumulatoren, langlebiger betreiben zu können.

Die Aufgabe wird gelöst durch ein Verfahren gemäß Anspruch 1 und eine Einrichtung gemäß Anspruch 6. Durch die temperaturabhängige Steuerung des Entladestroms kann die Einrichtung bzw. ein Akkumulator bzw. eine Zelle eines Akkumulators langlebiger und sicherer betrieben werden.

Unter einer nach galvanischen Prinzipien arbeitenden Einrichtung wird eine Einrichtung verstanden, die mindestens eine sogenannte galvanische Zelle aufweist, wobei die galvanische Zelle wenigstens eine erste und eine zweite Einrichtung zur Speicherung von elektrisch unterschiedlichen Ladungen sowie ein Mittel zur Herstellung einer elektrischen Wirkverbindung der beiden Ladungsspeichereinrichtungen aufweist, und wobei Ladungsträger zwischen diesen beiden genannten Einrichtungen verschoben werden können. Unter dem Mittel zur Herstellung einer elektrischen Wirkverbindung ist beispielsweise ein Elektrolyt, der als lonenleiter wirkt, zu verstehen.

Unter einem Betriebsmanagementsystem ist ein System zum Überwachen und Steuern eines elektrischen Betriebszustands der nach galvanischen Prinzipien arbeitenden Einrichtung zu verstehen, das den elektrischen Betriebszustand der Einrichtung, der durch bestimmte ausgewählte Funktionsparameter der Einrichtung beschrieben werden kann, überwacht und in Abhängigkeit von den Einsatzbedingungen der Einrichtung steuert. Die Steuerung kann sich dabei insbesondere auf einen Lade- bzw. Entladevorgang der Einrichtung, insbesondere der mindestens einen galvanischen Zelle, beziehen.

Unter den genannten, den elektrischen Betriebszustand der Einrichtung beschreibenden Funktionsparametern sind solche physikalischen Größen zu verstehen, die zur Beschreibung des Zustands einer galvanischen Zelle dienlich sein können. Diese Parameter umfassen beispielsweise die elektrische Kapazität einer galvanischen Zelle, die zwischen den beiden Polen der Zelle messbare elektrische Spannung, die insbesondere im Leerlauf oder als lastabhängige Klemmenspannung gemessen werden kann, die Stärke eines zur Ladung oder Entladung der Zelle führenden elektrischen Stroms, der Innenwiderstand einer galvanischen Zelle, mit dem die Zelle wie jede technische Spannungsquelle in aller Regel behaftet ist, eine bereits geladene oder verfügbare elektrische Ladung der galvanischen Zelle, Leckströme zwischen den Polen innerhalb der galvanischen Zelle, oder auch eine Temperatur der Zelle, die an repräsentativen Stellen bzw. Elementen der Zelle oder aus praktischen Gründen möglicherweise nur von außerhalb der Zelle gemessen wird. Je nach den Anforderungen an den Betrieb der galvanischen Zelle als wiederaufladbare Zelle können noch andere physikalische Größen oder davon abgeleitete Größen, wie etwa ein dem Fachmann bekannter, sogenannter Ladezustand (Englisch: State Of Charge, SOC) oder Gesundheitszustand (Englisch: State Of Health, SOH), die die Benutzungsvergangenheit, insbesondere die Lade- bzw. Entladevergangenheit der Zelle berücksichtigen, von Interesse sein.

Für den Betrieb der Einrichtung kann insbesondere ein Bereich von zulässigen Betriebstemperaturen festgelegt werden, der in mindestens zwei Temperaturintervalle unterteilt ist, wobei in den mindestens zwei Temperaturintervallen der elektrische Betriebszustand der Einrichtung gemäß unterschiedlicher Temperaturabhängigkeiten gesteuert wird. Ein Temperaturintervall kann dadurch festgelegt sein, dass das Intervall durch Angabe einer unteren Intervallgrenze ("größer als..."), einer oberen Intervallgrenze ("kleiner als...") oder durch Angabe einer unteren und einer oberen Intervallgrenze ("von... bis...") festgelegt ist. Durch derartige, variabel wählbare Temperaturintervalle und darin festgelegte unterschiedliche Temperaturabhängigkeiten zum Steuern des elektrischen Betriebszustands durch insbesondere Funktionsparameter der Einrichtung kann das Betriebsmanagementsystem für eine optimierte Steuerung an verschiedene Typen von galvanischen Zellen angepasst werden und somit variabel einsetzbar ausgestaltet werden.

Das Betriebsmanagementsystem kann dazu ausgebildet sein, eine Temperatur der Einrichtung und, insbesondere auch deren zeitlichen Verlauf zu erfassen und zu überwachen. Vorzugsweise umfasst dazu die Einrichtung, insbesondere das Betriebsmanagementsystem, mindestens eine Temperaturmesseinrichtung zum Messen einer Temperatur der Einrichtung, die mindestens einen Sensor, mindestens ein zugehöriges Sensorsignalübertragungsmittel und mindestens eine Signalauswerteinheit umfasst. Somit ist die Einrichtung nicht auf externe Temperaturmesseinrichtungen angewiesen. Eine bevorzugte Ausführungsform der Erfindung sieht vor, dass das Betriebsmanagementsystem (16) dazu ausgebildet ist, den elektrischen Betriebszustand der Einrichtung (10) auch in Abhängigkeit von einem vom Betriebsmanagementsystem ermittelten, für einen Ladezustand bzw. einen Gesundheitszustand der Einrichtung, insbesondere der galvanischen Zellen (14-1, 14-2, 14-3, 14-4) der Einrichtung, repräsentativen Parameter zu steuern.

Vorzugsweise ist die genannte Temperatur der Einrichtung eine Temperatur, die für eine Elektrode, insbesondere eine Kathode bzw. Anode, und/oder das Mittel zum Herstellen der elektrischen Wirkverbindung zwischen den Elektroden, insbesondere einem mit der Kathode bzw. Anode in elektrochemischer Wechselwirkung stehenden Elektrolyten, repräsentativ ist. Eine derartig repräsentative Temperatur charakterisiert in geeigneter Weise die funktionellen Elemente der galvanischen Zelle, bei denen durch den elektrischen Betrieb Wärmeenergie entsteht. Die repräsentative Temperatur der Kathode bzw. Anode kann eine für den Stromableiter der Kathode bzw. den Stromableiter der Anode repräsentative Temperatur sein. Die Wahl eines Stromableiters als Element, dessen Temperatur als repräsentative Temperatur der Einrichtung bzw. Zelle zur Steuerung von deren elektrischem Betriebszustand gemessen wird, hat den Vorteil, dass ein Stromableiter insbesondere an seinem äußeren, d.h. außerhalb eines Gehäuses der Zelle liegenden Ende leicht für eine Temperaturmessung zugänglich ist. Eine bevorzugte Ausführungsform der Erfindung sieht vor, dass ein Temperatursensor (56 bzw. 58 bzw. 60) der Temperaturmessvorrichtung in wärmeleitender Kommunikation mit dem Stromableiter (46) der Kathode (42) bzw. dem Stromableiter (50) der Anode (43) bzw. mit dem Elektrolyten (54) angeordnet ist.

Alternativ oder zusätzlich kann die repräsentative Temperatur der Kathode bzw. Anode eine für die Temperatur der Aktivschicht der Kathode bzw. der Aktivschicht der Anode repräsentative Temperatur sein. Bei der Wahl der Aktivschicht der Kathode bzw. Anode als repräsentative Temperatur erhält man eine Temperatur für den Bereich der Zelle, wo die elektrochemischen Prozesse ablaufen und wo beim Betrieb Wärmeenergie primär entsteht, was einen besonders repräsentativen, den elektrischen Betriebszustand der Einrichtung charakterisierende Temperaturwert als Grundlage für das Betriebsmanagementsystem zur Steuerung des elektrischen Betriebszustands der Einrichtung ermöglicht. Eine bevorzugte Ausführungsform der Erfindung sieht vor, dass die repräsentative Temperatur der Kathode (42) bzw. Anode (43) eine für die Temperatur der Aktivschicht (48) der Kathode (42) bzw. der Aktivschicht (52) der Anode (43) repräsentative Temperatur ist.

Die Einrichtung kann mindestens eine oder mehrere Temperaturmesseinrichtung zum Messen von einer oder mehreren repräsentativen Temperaturen der Einrichtung, insbesondere der mindestens einen galvanischen Zelle aufweisen. Eine bevorzugte Ausführungsform der Erfindung sieht vor, dass ein Temperatursensor (56 bzw. 58 bzw. 60) der Temperaturmessvorrichtung in wärmeleitender Kommunikation mit dem Stromableiter (46) der Kathode (42) bzw. dem Stromableiter (50) der Anode (43) bzw. mit dem Elektrolyten (54) angeordnet ist. Die Einrichtung kann auch 2, 3 insbesondere auch 4 oder mehr galvanische Zellen, insbesondere Lithium-lonen-Zellen, die elektrisch in Serien- und/oder Parallelschaltung geschaltet sein können, umfassen. Durch eine Serienschaltung der Zellen wird eine Spannungserhöhung bzw. eine Annäherung an eine von einer Anwendung benötigte elektrische Versorgungsspannung ermöglicht. Eine Parallelschaltung von Zellen erhöht die Kapazität der Einrichtung. Eine bevorzugte Ausführungsform der Erfindung sieht vor, dass die Einrichtung (10) zwei, drei, insbesondere vier oder mehr galvanische Zellen (14-1, 14-2, 14-3, 14-4), insbesondere Lithium-lonen-Zellen, umfasst. Eine bevorzugte Ausführungsform der Erfindung sieht vor, dass die Einrichtung zwei, drei, insbesondere vier oder mehr galvanische Zellen (14-1, 14-2, 14-3, 14-4), insbesondere Lithium-lonen-Zellen, und zu einer jeweiligen Zelle mindestens eine Temperaturmessvorrichtung (56-1, 58-1, 60-1, 62-1) umfasst. Eine bevorzugte Ausführungsform der Erfindung sieht vor, dass eine jeweilige Temperaturmessvorrichtung dazu ausgebildet ist, eine für die Temperatur der jeweiligen Zelle (14-1, 14-2, 14-3, 14-4) repräsentative Temperatur zu messen.

Das Betriebsmanagementsystem kann dazu ausgebildet sein, die Einrichtung so zu betreiben, dass mindestens zwei galvanische Zellen im sogenannten Zellenausgleich (Englisch: Cell Balancing) miteinander betrieben werden.

Wenn die Einrichtung 2, 3, insbesondere auch 4 oder mehr galvanische Zellen aufweist, umfasst sie vorzugsweise ferner für eine jeweilige Zelle mindestens eine oder mehrere Temperaturmessvorrichtungen. Dies ermöglicht eine zellenspezifische Erfassung der Temperatur als Grundlage für die Steuerung des elektrischen Betriebszustands der Einrichtung, insbesondere des elektrischen Betriebszustands einer jeweiligen galvanischen Zelle. Dazu ist vorteilhaft eine jeweilige Temperaturmessvorrichtung ausgebildet, eine für die jeweilige Zelle repräsentative Temperatur zu messen.

Zur Steuerung des elektrischen Betriebszustands der Einrichtung in mindestens zwei verschiedenen Temperaturintervallen unter Benutzung von voneinander unterschiedlichen Temperaturabhängigkeiten kann insbesondere einem jeweiligen Temperaturintervall ein insbesondere für den Typ der Einrichtung vorbestimmter Soll-Entladestrom zugeordnet sein. Praktische Erfahrungen zeigen, dass insbesondere eine temperaturabhängige Regelung des Entladestroms sehr gute Ergebnisse bei der Verbesserung der Langlebigkeit der galvanischen, insbesondere Lithium-lonen-Zelle ermöglicht. Eine bevorzugte Ausführungsform der Erfindung sieht vor, dass einem jeweiligen Temperaturintervall (80-1, 80-2, 80-3, 80-4) ein, insbesondere für den Typ der Einrichtung vorbestimmter, Soll-Entladestrom zugeordnet ist.

Die Einrichtung kann einen unteren Temperaturgrenzwert bzw. einen oberen Temperaturgrenzwert aufweisen, die für die Einrichtung im Voraus bestimmt sind und/oder im Betrieb angepasst werden können. Dabei kann das Betriebsmanagementsystem dazu ausgebildet sein, zu bewirken, dass die Einrichtung nicht betrieben, insbesondere die mindestens eine galvanische Zelle nicht geladen bzw. entladen, werden kann, wenn eine repräsentative Temperatur der mindestens einen galvanischen Zelle unter dem unteren Temperaturgrenzwert bzw. über dem oberen Temperaturgrenzwert ist. Eine derartige Steuerung erhöht die Betriebssicherheit, insbesondere verringert die Einführung einer Temperaturobergrenze wie beschrieben das Risiko einer thermischen Zerstörung, insbesondere den dem Fachmann unter dem Begriff "Thermal Runaway" bekannten Zerstörungsprozess einer Zelle. Eine bevorzugte Ausführungsform der Erfindung sieht vor, dass die Einrichtung einen unteren Temperaturgrenzwert (T_{uGr}) bzw. einen oberen Temperaturgrenzwert (T_{oGr}) aufweist, wobei das Betriebsmanagementsystem (16) dazu ausgebildet ist, zu bewirken, dass die Einrichtung (10) nicht betrieben, insbesondere die mindestens eine galvanische Zelle (14-1, 14-2, 14-3, 14-4) nicht geladen bzw. nicht entladen, werden kann, wenn eine Temperatur der mindestens einen galvanischen Zelle (14-1, 14-2, 14-3, 14-4) unter dem unteren Temperaturgrenzwert (T_{uGr}) bzw. über dem oberen Temperaturgrenzwert (T_{oGr}) ist.

Die Einrichtung weist einen ersten Temperaturgrenzwert, einen zweiten Temperaturgrenzwert, der größer oder gleich dem ersten Temperaturgrenzwert ist und zusammen mit dem ersten Temperaturgrenzwert ein erstes Temperaturintervall definiert, einen dritten Temperaturgrenzwert, der größer oder gleich dem zweiten Temperaturgrenzwert ist und zusammen mit dem zweiten Temperaturgrenzwert ein zweites Temperaturintervall definiert, und einen vierten Temperaturgrenzwert, der größer oder gleich dem dritten Temperaturgrenzwert ist und zusammen mit dem dritten Temperaturgrenzwert ein drittes Temperaturintervall definiert, auf. Dabei ist insbesondere der erste bis vierte Temperaturgrenzwert für die Einrichtung, insbesondere die mindestens eine galvanische Zelle, vorbestimmt und/oder wird während des Betriebs der Einrichtung angepasst. Das Betriebsmanagementsystem ist zu folgendem ausgebildet :
- den Entladestrom der mindestens einen galvanischen Zelle im zweiten Temperaturintervall zwischen dem zweiten und dritten Temperaturgrenzwert auf einen maximalen Entlade-Stromwert (Iₘₐₓ) zu begrenzen,
- den Entladestrom der mindestens einen galvanischen Zelle im ersten Temperaturintervall zwischen dem ersten und zweiten Temperaturgrenzwert auf einen ersten Entlade-Stromwert (I₁) zu begrenzen, der kleiner als der maximale Entlade-Stromwert im zweiten Temperaturintervall ist (d.h. insbesondere I₁ ≤ x₁ × Iₘₐₓ und 0 < x₁ < 100%),
- den Entladestrom der mindestens einen galvanischen Zelle im dritten Temperaturintervall zwischen dem dritten und vierten Temperaturgrenzwert auf einen zweiten Entlade-Stromsollwert (I₂) zu begrenzen, der ebenfalls kleiner als der maximale Entlade-Stromwert im zweiten Temperaturintervall ist (d.h. insbesondere I₂ ≤ x₂ × Iₘₐₓ und 0 < x₂ < 100%).

Die Bereitstellung von drei Temperaturintervallen mit jeweils verschiedenen Regelungsvorschriften für den Entladestrom ermöglicht eine besonders gute Anpassung des Betriebsmanagementsystems an verschiedene Zellentypen und eine technisch besonders einfache Implementierung bzw. Programmierung eines Algorithmus des Betriebsmanagementsystems zum Regeln des elektrischen Betriebszustands der Einrichtung.

Erfindungsgemäß ist vorgesehen, dass die Einrichtung einen ersten Temperaturgrenzwert (82-1, T1), einen zweiten Temperaturgrenzwert (82-2, T2), der größer als der erste Temperaturgrenzwert (T1) ist, einen dritten Temperaturgrenzwert (82-3, T3), der größer als der zweite Temperaturgrenzwert (T2) ist, und einen vierten Temperaturgrenzwert (82-4, T4), der größer als der dritte Temperaturgrenzwert (T3) ist, aufweist,
wobei das Betriebsmanagementsystem (16) zu Folgendem ausgebildet ist:
- den Entlade-Sollstrom der mindestens einen galvanischen Zelle (14-1, 14-2, 14-3, 14-4) im Temperaturintervall (80-2) zwischen dem zweiten und dritten Temperaturgrenzwert (T2, T3) auf einen maximalen Entlade-Stromwert (Imax) zu begrenzen,
- den Entlade-Sollstrom der mindestens einen galvanischen Zelle (14-1, 14-2, 14-3, 14-4) im Temperaturintervall (80-1) zwischen dem ersten und zweiten Temperaturgrenzwert (T1, T2) auf einen ersten Entlade-Stromwert (I₁) zu begrenzen, der kleiner als der maximale Entlade-Stromwert (Iₘₐₓ) im Temperaturintervall (80-2) zwischen dem zweiten und dritten Temperaturgrenzwert (T2, T3) ist (so dass insbesondere I₁ ≤ x1 × Iₘₐₓ und 0 < x1 < 100% ist),
- den Entlade-Sollstrom der mindestens einen galvanischen Zelle (14-1, 14-2, 14-3, 14-4) im Temperaturintervall (80-3) zwischen dem dritten und vierten Temperaturgrenzwert (T3, T4) auf einen zweiten Entlade-Stromwert (I₂) zu begrenzen, der ebenfalls kleiner als der maximale Entlade-Stromwert (Iₘₐₓ) im

Temperaturintervall (80-2) zwischen dem zweiten und dritten Temperaturgrenzwert (T2, T3) ist (so dass insbesondere I₂ ≤ x2 × Iₘₐₓ und 0 < x2 < 100% ist).

In der vorgenannten Ausführungsform mit drei Temperaturintervallen kann das Betriebsmanagementsystem dazu ausgebildet sein, den Entladestrom der mindestens einen galvanischen Zelle im Temperaturintervall zwischen dem dritten und vierten Temperaturgrenzwert auf einen minimalen Entladestromwert (I₃) zu begrenzen, so dass der Entladestrom in diesem Temperaturintervall nicht kleiner als der minimale Entladestromwert (I₃) und nicht größer als der besagte zweite maximale Entladestromwert (I₂) ist (d.h. insbesondere I₃ ≥ x₃ × Iₘₐₓ und 0 < x₃ < x₂ < 100%). In ähnlicher Weise kann das Betriebsmanagementsystem auch dazu ausgebildet sein, den Entladestrom der mindestens einen galvanischen Zelle im Temperaturintervall zwischen dem ersten und zweiten Temperaturgrenzwert auf einen minimalen Entladestromsollwert (I₃') zu begrenzen, so dass der Entladestrom in diesem Temperaturintervall nicht kleiner als der minimale Entladestromwert (I₃') und nicht größer als der besagte erste Entladestromwert (I₁) ist (d.h. insbesondere I₃' ≥ x₃' × Iₘₐₓ und 0 < x₃' < x₁ < 100%). Auf diese Weise wird in den betreffenden Temperaturintervallen ein Regelbereich für den Entladestrom zwischen dem dritten, minimalen und dem zweiten, maximalen Entladestromwert vorgegeben und der Regelbereich zur Erhöhung der Sicherheit und der Langlebigkeit nach oben und unten begrenzt. Eine bevorzugte Ausführungsform der Erfindung sieht vor, dass das Betriebsmanagementsystem (16) dazu ausgebildet ist, - den Entlade-Sollstrom der mindestens einen galvanischen Zelle (14-1, 14-2, 14-3, 14-4) im Temperaturintervall (80-3) zwischen dem dritten und vierten Temperaturgrenzwert (T3, T4) auf einen dritten, minimalen Entlade-Stromwert (I₃) zu begrenzen, so dass der Entladestrom in diesem Temperaturintervall nicht kleiner als der minimale Entladestromwert (I₃) und nicht größer als der besagte zweite maximale Entladestromwert (I₂) ist (so dass insbesondere I₃ ≥ x3 × Iₘₐₓ und 0 < x3 < x2 ist).

Zur Verfeinerung der Anpassung des Regelalgorithmus bzw. der Steuerung durch das Betriebsmanagementsystem an verschiedene Akkumulatortypen kann die Einrichtung auch einen fünften Temperaturgrenzwert aufweisen, der größer oder gleich dem vierten Temperaturgrenzwert ist und zusammen mit dem vierten Temperaturgrenzwert ein viertes Temperaturintervall definiert. Dabei ist das Betriebsmanagementsystem dazu ausgebildet, den Entladesollstrom der mindestens einen galvanischen Zelle im Temperaturintervall zwischen dem vierten und fünften Temperaturgrenzwert auf einen vierten Entladestrom (I₄) zu begrenzen, der kleiner als der maximale Entladestrom (Iₘₐₓ) im dritten Temperaturintervall zwischen dem dritten und vierten Temperaturgrenzwert ist. Alternativ zum fünften Temperaturgrenzwert oder zusätzlich dazu kann auch ein weiterer, sechster Temperaturgrenzwert festgelegt werden, der kleiner oder gleich dem ersten Temperaturgrenzwert ist und zusammen mit dem ersten Temperaturgrenzwert ein fünftes Temperaturintervall definiert. Dabei ist das Betriebsmanagementsystem dazu ausgebildet, den Entladesollstrom der mindestens einen galvanischen Zelle im Temperaturbereich zwischen dem sechsten und dem ersten Temperaturgrenzwert auf einen fünften Entladestrom (I₅) zu begrenzen, der kleiner als der Entladestrom (I₁) im ersten Temperaturintervall zwischen dem ersten und zweiten Temperaturgrenzwert ist. Die Bereitstellung eines vierten bzw. fünften Temperaturintervalls ermöglicht eine weitere Verfeinerung der Anpassung der Steuerung des elektrischen Betriebszustands der Einrichtung an verschiedene Akkumulatortypen.

Eine bevorzugte Ausführungsform der Erfindung sieht vor, dass die Einrichtung einen fünften Temperaturgrenzwert (T5), der größer oder gleich dem vierten Temperaturgrenzwert (T4) ist, aufweist, und dass das Betriebsmanagementsystem (16) dazu ausgebildet ist, den Entlade-Sollstrom (I4) der mindestens einen galvanischen Zelle (14-1, 14-2, 14-3, 14-4) im Temperaturintervall (80-4) zwischen dem vierten und fünften Temperaturgrenzwert (T4, T5) auf einen vierten Entladestrom (I₄) zu begrenzen, der kleiner als der zweite Entladestrom (12) im Temperaturintervall zwischen dem dritten und vierten Temperaturgrenzwert (T3, T4) ist. Eine bevorzugte Ausführungsform der Erfindung sieht vor, dass der Parameter x1 nicht größer als 90% und nicht kleiner als 30% ist, insbesondere ausgewählt ist aus einer Gruppe, die die Werte von im Wesentlichen 90%, 80%, 70%, 60%, 40% oder 30% umfasst. Eine bevorzugte Ausführungsform der Erfindung sieht vor, dass das Parameterpaar (x3, x2) ausgewählt ist aus einer Gruppe, die die Parameterpaare von im Wesentlichen (90%, 10%), (90%, 20%), (90%, 30%), (90%, 40%), (80%, 10%), (80%, 20%), (80%, 30%) oder (80%, 40%) umfasst.

Zur Schonung der Elektroden insbesondere vor den bei den Temperaturgrenzwerten (Tₓ mit x = 1, 2, ... 6) bzw. Umschaltpunkten auftretenden Sprünge im Regelwert für den Entladestrom kann das Betriebsmanagementsystem dazu ausgebildet sein, den Entladestrom der mindestens einen galvanischen Zelle auf einen Zwischenwert zu regeln, wobei der Zwischenwert zwischen dem Entladesollstrom unterhalb des Temperaturgrenzwerts und dem Entlade-Sollstrom oberhalb des Temperaturgrenzwerts liegt, wenn die Temperatur in einem Temperaturübergangsintervall ist. Das Temperaturübergangsintervall kann sich unterhalb angrenzend an den Temperaturgrenzwert (Tₓ mit x = 1, 2, ... 6) erstrecken und eine erste Temperaturbreite (δ1) aufweisen, so dass sich das Temperaturübergangsintervall von Tₓ - δ1 bis Tₓ erstreckt. Dabei kann die erste Temperaturbreite (δ1) kleiner als die Breite des sich unterhalb des Temperaturgrenzwerts (Tₓ) erstreckenden Temperaturintervalls sein. Entsprechend kann das Betriebsmanagementsystem auch dazu ausgebildet sein, den Entladestrom der mindestens einen galvanischen Zelle auf einen Zwischenwert zu regeln, wenn die Temperatur in einem Temperaturübergangsintervall ist, dass sich insbesondere oberhalb angrenzend an den Temperaturgrenzwert erstreckt und eine zweite Temperaturbreite (δ2) aufweist, d.h. wenn die Temperatur in dem Temperaturintervall von Tₓ bis Tₓ + δ2 ist. Dabei kann die zweite Temperaturbreite kleiner als die Breite des sich oberhalb des Temperaturgrenzwerts an diesen Temperaturgrenzwert angrenzend erstreckenden Intervalls sein. Eine bevorzugte Ausführungsform der Erfindung sieht vor, dass das Betriebsmanagementsystem (16) dazu ausgebildet ist, den Entlade-Sollstrom der mindestens einen galvanischen Zelle (14-1, 14-2, 14-3, 14-4) auf einen Zwischenwert (86), der zwischen dem Entlade-Sollstrom unterhalb eines Temperaturgrenzwerts (Tx mit x = 1, 2, 3, 4 oder 5) und dem Entlade-Sollstrom oberhalb des Temperaturgrenzwerts (Tx) liegt, zu regeln, wenn die Temperatur in einem Temperaturübergangsintervall (84-1) mit einer ersten Temperaturbreite (δ1) unterhalb angrenzend an den Temperaturgrenzwert (Tx), wobei insbesondere die Temperaturbreite (δ1) nicht größer als die Breite eines sich von dem Temperaturgrenzwert (Tx) zu niedrigeren Temperaturen hin erstreckenden Temperaturintervalls ist.

Das Einfügen des Zwischenwerts für den Entlade-Sollstrom in dem an den Temperaturgrenzwert angrenzenden Temperaturübergangsintervall bewirkt einen weniger stark ausgeprägten Sprung des Regelstromwerts und mithin einen kontinuierlicheren Übergang des geregelten Entlade, wenn sich die Temperatur über den Temperaturgrenzwert verändert, und damit einen schonenderen Betrieb der Elektroden der galvanischen Zelle, insbesondere der Anoden einer Lithium-Ionen-Zelle. Eine bevorzugte Ausführungsform der Erfindung sieht vor, dass das Betriebsmanagementsystem (16) dazu ausgebildet ist, den Entlade-Sollstrom der mindestens einen galvanischen Zelle (14-1, 14-2, 14-3, 14-4) auf einen Zwischenwert (86, 86-1, 86-2...), der zwischen dem Entlade-Sollstrom oberhalb eines Temperaturgrenzwerts (Tx mit x = 1, 2, 3, 4 oder 5) und dem Entlade-Sollstrom unterhalb des Temperaturgrenzwerts (Tx) liegt, zu regeln, wenn die Temperatur in einem Temperaturübergangsintervall (84-2) mit einer zweiten Temperaturbreite (δ2) oberhalb angrenzend an den Temperaturgrenzwert (Tx), wobei insbesondere die Temperaturbreite (δ2) nicht größer als die Breite eines sich von dem Temperaturgrenzwert (Tx) zu höheren Temperaturen hin erstreckenden Temperaturintervalls ist.

Eine noch bessere Schonung kann dadurch erzielt werden, dass das Betriebsmanagementsystem dazu ausgebildet ist, wenn die Temperatur in einem Temperaturübergangsintervall ist, den Entlade-Sollstrom auf mindestens zwei unterschiedliche Zwischenwerte oder noch besser gemäß einer treppenförmigen Sollwertkurve als Funktion der Temperatur zu regeln. Noch vorteilhafter im Hinblick auf die Schonung der Elektroden kann es sein, das Betriebsmanagementsystem dazu auszubilden, dass es den Entladestrom kontinuierlich in Abhängigkeit von der Temperatur zwischen dem Entlade-Sollstrom im Temperaturintervall unterhalb des jeweiligen Temperaturgrenzwerts und dem Entladesollstrom oberhalb des jeweiligen Temperaturgrenzwerts regelt, wenn die Temperatur in einem Temperaturübergangsintervall ist. Eine kontinuierliche Regelung der Temperatur kann durch eine lineare oder eine in einer grafischen Darstellung S-förmige, linksgekrümmte oder rechtsgekrümmte Temperaturabhängigkeit des Entlade-Sollstroms als Funktion der Temperatur. Eine bevorzugte Ausführungsform der Erfindung sieht vor, dass das Betriebsmanagementsystem (16) dazu ausgebildet ist, den Entlade-Sollstrom auf mindestens zwei unterschiedliche Zwischenwerte (86-1, 86-2) zu regeln, wenn die Temperatur in einem Temperaturübergangsintervall ist.

Der untere Temperaturgrenzwert bzw. der erste Temperaturgrenzwert, unterhalb dem der Entlade-Sollstrom auf im wesentlichen Null geregelt wird bzw. unterhalb dem die Einrichtung nicht betrieben werden kann, kann aus dem Intervall von 5°C bis 15°C, bevorzugt aus dem Intervall von 7°C bis 13°C, noch bevorzugter aus dem Intervall 9°C bis 11°C, noch bevorzugter im wesentlichen 10°C sein. Die bevorzugte Wahl des unteren Temperaturgrenzwerts erfolgt in Abhängigkeit von und zur Anpassung an den Typ der galvanischen Zelle. Eine bevorzugte Ausführungsform der Erfindung sieht vor, dass der untere Temperaturgrenzwert (82-1, T_{uGr}) bzw. der erste Temperaturgrenzwert (82-1, T1) ausgewählt ist aus dem Intervall 5°C bis 15°C, bevorzugt aus dem Intervall 7°C bis 13°C, noch bevorzugter aus dem Intervall 9°C bis 11°C, und noch bevorzugter im Wesentlichen 10°C ist.

Es kann vorteilhaft sein, dass ein erster Temperaturgrenzwert, der ausgewählt ist aus einer Gruppe, die den unteren Temperaturgrenzwert, den ersten Temperaturgrenzwert, den zweiten Temperaturgrenzwert, den dritten Temperaturgrenzwert, den vierten Temperaturgrenzwert, den fünften Temperaturgrenzwert, den sechsten Temperaturgrenzwert und den oberen Temperaturgrenzwert umfasst, ein Temperaturgrenzwert für eine erste repräsentative Temperatur der Einrichtung, beispielsweise eine Temperatur des Elektrolyten, ist und dass ein von dem ersten verschiedener, zweiter Temperaturgrenzwert, der ausgewählt ist aus der Gruppe, die den unteren Temperaturgrenzwert und den ersten Temperaturgrenzwert, den zweiten Temperaturgrenzwert, den dritten Temperaturgrenzwert, den vierten Temperaturgrenzwert, den fünften Temperaturgrenzwert, den sechsten Temperaturgrenzwert und den oberen Temperaturgrenzwert umfasst, ein Temperaturgrenzwert für eine von der ersten verschiedene, zweite repräsentative Temperatur, beispielsweise eine Temperatur von einer der Elektroden, ist. Durch die Anpassung der repräsentativen Temperatur, insbesondere beispielsweise der Messposition für die Messung der repräsentativen Temperatur an die Verwendung des Temperaturgrenzwerts, beispielsweise als untere Grenze und/oder als obere Grenze eines Temperaturintervalls kann die Regelgenauigkeit bzw. die Regelzuverlässigkeit erhöht werden. Eine bevorzugte Ausführungsform der Erfindung sieht vor, dass ein erster Temperaturgrenzwert, der ausgewählt ist aus einer Gruppe, die den unteren Temperaturgrenzwert (T_{uGr}), den ersten Temperaturgrenzwert (T1), den zweiten Temperaturgrenzwert (T2), den dritten Temperaturgrenzwert (T3), den vierten Temperaturgrenzwert (T4), den fünften Temperaturgrenzwert (T5) und den oberen Temperaturgrenzwert (T_{oGr}) umfasst, ein Temperaturgrenzwert für eine erste repräsentative Temperatur, beispielsweise eine Temperatur des Elektrolyten (54), ist und dass ein vom ersten verschiedener, zweiter Temperaturgrenzwert, der ausgewählt ist aus einer Gruppe, die den unteren Temperaturgrenzwert (T_{uGr}), den ersten Temperaturgrenzwert (T1), den zweiten Temperaturgrenzwert (T2), den dritten Temperaturgrenzwert (T3), den vierten Temperaturgrenzwert (T4), den fünften Temperaturgrenzwert (T5) und den oberen Temperaturgrenzwert (T_{oGr}) umfasst, ein Temperaturgrenzwert für eine von der ersten verschiedene, zweite repräsentative Temperatur, beispielsweise eine Temperatur von einer der Elektroden (44+, 44-), ist.

Beispielsweise kann eine erste repräsentative Temperatur, die beispielsweise als ein erster unterer Temperaturgrenzwert im Regelalgorithmus für den elektrischen Betriebszustand verwendet wird, eine Temperatur an einer Stelle bzw. einem Element der Einrichtung ist, wo erwartungsgemäß die Temperatur relativ niedrig ist, insbesondere niedriger als eine gemittelte Temperatur der Einrichtung, und ein zweiter Temperaturgrenzwert, der beispielsweise als eine Obergrenze eines Temperaturintervalls in dem Regelalgorithmus verwendet wird, an einer Stelle bzw. einem Element der Einrichtung gemessen wird, wo die Temperatur im Betrieb erwartungsgemäß relativ hoch ist, insbesondere höher als eine gemittelte Temperatur der Einrichtung. Dann wird die untere bzw. obere Regelbereichsgrenze bei einer fallenden bzw. steigenden Temperatur frühzeitiger detektiert als wenn der Temperaturgrenzwert durch gemittelte Temperatur der Einrichtung definiert ist.

In einem weiteren Aspekt der Erfindung wird die Aufgabe gelöst durch ein Verfahren zum Überwachen und Steuern eines elektrischen Betriebszustands einer nach galvanischen Prinzipien arbeitenden Einrichtung mit mindestens einer galvanischen Zelle, insbesondere einer Lithium-Ionen-Zelle, wobei das Verfahren die folgenden Schritte umfasst:
(1) Überwachen der Stärke eines zur Entladung der Zelle führenden elektrischen Stroms, nachfolgend Entladestrom genannt, der Einrichtung,
(2) Überwachen einer Temperatur der Einrichtung, und
(3) Steuern des Entladestroms der mindestens einen Zelle, in Abhängigkeit von der Temperatur.

Der Schritt (3) umfasst ferner folgendes:
- Festlegen eines ersten Temperaturgrenzwerts, eines zweiten Temperaturgrenzwerts, der größer als der erste Temperaturgrenzwert ist, eines dritten Temperaturgrenzwerts, der größer der zweite Temperaturgrenzwert ist, sowie eines vierten Temperaturgrenzwerts, der größer als der dritte Temperaturgrenzwert ist
- Begrenzen des Entladestroms der mindestens einen galvanischen Zelle im zweiten Temperaturintervall zwischen dem zweiten und dritten Temperaturgrenzwert auf einen maximalen Entladestromwert (Iₘₐₓ),
- Begrenzen des Entladestroms der mindestens einen galvanischen Zelle im ersten Temperaturintervall zwischen dem ersten und zweiten Temperaturgrenzwert auf einen ersten Entladestromwert (I₁), der kleiner als der maximale Entlade-Stromwert im zweiten Temperaturintervall ist (d.h. insbesondere I₁ ≤ x₁ × Iₘₐₓ und 0 < x₁ < 100%),
- Begrenzen des Entlade-Sollstroms der mindestens einen galvanischen Zelle im dritten Temperaturintervall zwischen dem dritten und vierten Temperaturgrenzwert auf einen zweiten Entladestromwert (I₂), der ebenfalls kleiner als der maximale Entlade-Stromwert im zweiten Temperaturintervall ist (d.h. insbesondere I₂ ≤ x₂ × Iₘₐₓ und 0 < _{X2} < 100%.

Diesem Verfahren und dessen im Folgenden beschriebenen vorteilhaften Ausgestaltungen des Verfahrens entsprechen sinngemäß einige der vorgenannten Ausgestaltungen des Regelungsalgorithmus des Betriebsmanagementsystems zur temperaturabhängigen Steuerung des elektrischen Betriebszustands. Daher werden die oben bereits erwähnten Vorteile bzw. Wirkungen im Folgenden nicht wiederholt.

In dem Verfahren kann der Schritt (3) das Steuern des elektrischen Betriebszustands der Einrichtung in mindestens zwei verschiedenen Temperaturintervallen vermittels voneinander unterschiedlicher Temperaturabhängigkeiten umfassen.

In dem Verfahren kann Schritt (1) einen Schritt des Erfassens der Temperatur der Einrichtung, unter Benutzung einer Temperaturmesseinrichtung zum Messen einer Temperatur der Einrichtung, umfassen.

Der Schritt (3) des Verfahrens kann ferner das Steuern des elektrischen Betriebszustands der Einrichtung in Abhängigkeit von einem von einem Betriebsmanagementsystem vermittelten und für einen Ladezustand bzw. einen Gesundheitszustand der Einrichtung, insbesondere der galvanischen Zellen der Einrichtung, repräsentativen Parameter umfassen.

Der Schritt (3) des Verfahrens kann ferner folgendes umfassen:
- Festlegen eines unteren Temperaturgrenzwerts bzw. eines oberen Temperaturgrenzwerts,
- Bewirken, dass die Einrichtung nicht betrieben wird, insbesondere die mindestens eine galvanische Zelle nicht geladen bzw. nicht entladen wird, wenn eine Temperatur der mindestens einen galvanischen Zelle unter dem unteren Temperaturgrenzwert bzw. über dem oberen Temperaturgrenzwert ist.

Eine bevorzugte Ausführungsform der Erfindung sieht vor, dass Schritt (3) ferner umfasst:
- Festlegen eines fünften Temperaturgrenzwerts (T5), der größer oder gleich dem vierten Temperaturgrenzwert (T4) ist,
- Begrenzen des Entlade-Sollstroms der mindestens einen galvanischen Zelle (14-1, 14-2, 14-3, 14-4) im Temperaturintervall (80-4) zwischen dem vierten und fünften Temperaturgrenzwert (T4, T5) auf einen vierten Entladestromwert (I₄), der kleiner als der zweite Entlade-Sollstrom (I₂) im Temperaturintervall zwischen dem dritten und vierten Temperaturgrenzwert (T3, T4) ist.

Eine bevorzugte Ausführungsform der Erfindung sieht vor, dass Schritt (3) ferner umfasst:
Regeln des Entlade-Sollstroms der mindestens einen galvanischen Zelle (14-1, 14-2, 14-3, 14-4) auf einen Zwischenwert (86), der zwischen dem Entlade-Sollstrom unterhalb eines Temperaturgrenzwerts (Tx mit x = 1, 2, 3, 4 oder 5) und dem Entlade-Sollstrom oberhalb des Temperaturgrenzwerts (Tx) liegt, wenn die Temperatur in einem Temperaturübergangsintervall (84-1) mit einer ersten Temperaturbreite (δ1) unterhalb angrenzend an den Temperaturgrenzwert (Tx),
wobei insbesondere die Temperaturbreite δ1 nicht größer als die Breite eines sich von dem Temperaturgrenzwert (Tx) zu niedrigeren Temperaturen hin erstreckenden Temperaturintervalls ist.

In dieser Ausgestaltung kann Schritt (3) noch ferner umfassen:
- Begrenzen des Entlade-Sollstroms der mindestens einen galvanischen Zelle im Temperaturintervall zwischen dem dritten und vierten Temperaturgrenzwert auf einen dritten, minimalen Entlade-Stromwert (I₃), so dass der Entladestrom in diesem Temperaturintervall nicht kleiner als der minimale Entladestromwert (I₃) und nicht größer als der besagte zweite maximale Entladestromwert (I₂) ist (d.h. insbesondere x₃ × Iₘₐₓ ≤ I₃ ≤ x₂ × Iₘₐₓ und 0 < x₃ < x₂ < 100%).

In dieser Ausgestaltung kann Schritt (3) noch ferner umfassen:
- Festlegen eines fünften Temperaturgrenzwerts, der größer oder gleich dem vierten Temperaturgrenzwert ist und mit letzterem ein viertes Temperaturintervall definiert,
- Begrenzen des Entlade-Sollstroms der mindestens einen galvanischen Zelle im vierten Temperaturintervall zwischen dem vierten und fünften Temperaturgrenzwert auf einen vierten Entlade-Stromwert (I₄), der kleiner als der zweite Entlade-Sollstrom (I₂) im dritten Temperaturintervall zwischen dem dritten und vierten Temperaturgrenzwert ist.

In den Ausgestaltungen mit Festlegungen von Temperaturgrenzwerten kann Schritt (3) ferner umfassen:
Regeln des Entlade-Sollstroms der mindestens einen galvanischen Zelle auf einem Zwischenwert, der zwischen dem Entlade-Sollstrom unterhalb eines Temperaturgrenzwerts und dem Entlade-Sollstrom oberhalb des Temperaturgrenzwerts liegt, wenn die Temperatur in einem Temperaturübergangsintervall ist. Dabei kann das Temperaturübergangsintervall sich unterhalb angrenzend an den Temperaturgrenzwert erstrecken und eine erste Temperaturbreite (δ1) aufweisen. Dabei kann insbesondere die erste Temperaturbreite (δ1) nicht größer als die Breite des sich von dem Temperaturgrenzwert zu niedrigeren Temperaturen hin erstreckenden Temperaturintervalls sein. Eine bevorzugte Ausführungsform der Erfindung sieht vor, dass das Betriebsmanagementsystem (16) dazu ausgebildet ist, wenn die Temperatur in einem Temperaturübergangsintervall (84, 84-1, 84-2) ist, den Entlade-Sollstrom in Abhängigkeit von der Temperatur kontinuierlich zwischen dem Entlade-Sollstrom im Temperaturintervall unterhalb des jeweiligen Temperaturgrenzwerts (Tx) und dem Entlade-Sollstrom oberhalb des jeweiligen Temperaturgrenzwerts (Tx) zu regeln.

Alternativ bzw. zusätzlich dazu kann der Schritt (3) ferner umfassen:
Regeln des Entlade-Sollstroms der mindestens einen galvanischen Zelle auf einem Zwischenwert, der zwischen dem Entlade-Sollstrom oberhalb eines Temperaturgrenzwerts und dem Entlade-Sollstrom unterhalb des Temperaturgrenzwerts liegt, wenn die Temperatur in einem Temperaturübergangsintervall ist. Dabei kann das Temperaturübergangsintervall sich oberhalb angrenzend an den Temperaturgrenzwert erstrecken und eine zweite Temperaturbreite (δ2) aufweisen. Dabei kann insbesondere die zweite Temperaturbreite (δ2) nicht größer als die Breite des sich von dem Temperaturgrenzwert zu höheren Temperaturen hin erstreckenden Temperaturintervalls sein.

Eine bevorzugte Ausführungsform der Erfindung sieht vor, dass Schritt (3) ferner umfasst:
Regeln des Entlade-Sollstroms der mindestens einen galvanischen Zelle (14-1, 14-2, 14-3, 14-4) auf einen Zwischenwert (86, 86-1, 86-2...), der zwischen dem Entlade-Sollstrom oberhalb eines Temperaturgrenzwerts (Tx mit x = 1, 2, 3, 4 oder 5) und dem Entlade-Sollstrom unterhalb des Temperaturgrenzwerts (Tx) liegt, wenn die Temperatur in einem Temperaturübergangsintervall (84-2) mit einer zweiten Temperaturbreite (δ2) oberhalb angrenzend an den Temperaturgrenzwert (Tx), wobei insbesondere die Temperaturbreite δ2 nicht größer als die Breite eines sich von dem Temperaturgrenzwert (Tx) zu höheren Temperaturen hin erstreckenden Temperaturintervalls ist.

Eine bevorzugte Ausführungsform der Erfindung sieht vor, dass Schritt (3) ferner umfasst:
wenn die Temperatur in einem Temperaturübergangsintervall (84, 84-1, 84-2) ist, Regeln des Entlade-Sollstroms in Abhängigkeit von der Temperatur kontinuierlich zwischen dem Entlade-Sollstromwert im Temperaturintervall unterhalb des jeweiligen Temperaturgrenzwerts (Tx) und dem Entlade-Sollstromwert oberhalb des jeweiligen Temperaturgrenzwerts (Tx).

Weitere vorteilhafte Ausführungsformen ergeben sich aus den beigefügten Zeichnungen. Darin zeigen:
Fig. 1 ein schematisches Blockschaltbild einer nach galvanischen Prinzipien arbeitenden Einrichtung nach der Erfindung.
Fig. 2 eine schematische grafische Darstellung einer temperaturabhängigen Ladesollstromregelung nach der Erfindung.
Fig. 3 eine schematische Darstellung einer erfindungsgemäßen sprunghaften Änderung eines Sollladestroms einer galvanischen Zelle bei einem Temperaturgrenzwert.
Figuren 3A bis 3F schematische Darstellungen von kontinuierlichen Übergängen eines Sollladestroms in einem Temperaturübergangsintervall bei einem Temperaturgrenzwert nach der Erfindung.

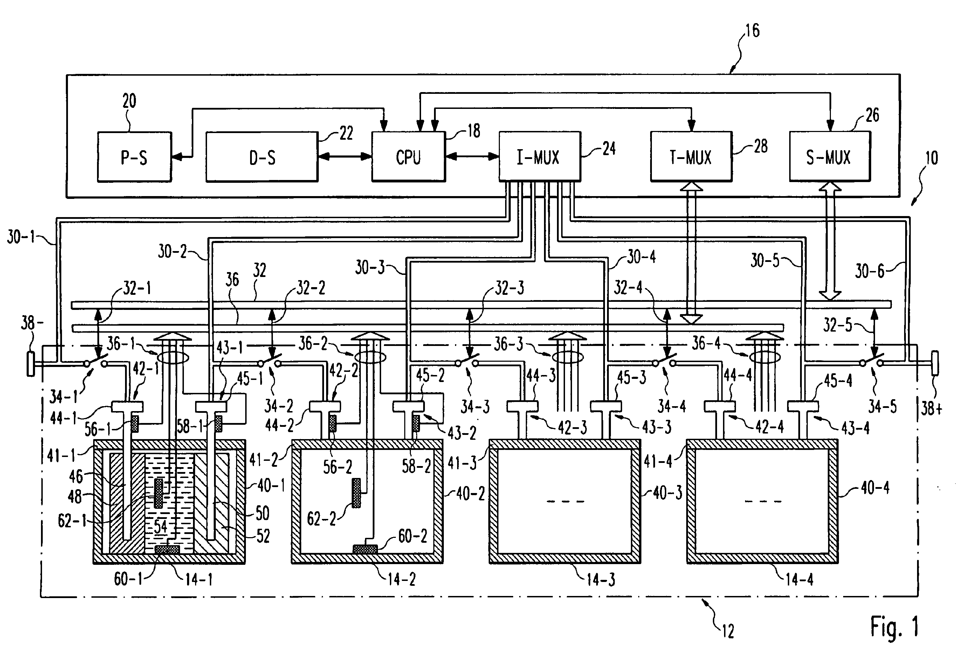

Fig. 1 zeigt in einem schematischen Blockschaltbild eine nach galvanischen Prinzipien arbeitende Einrichtung 10 nach der Erfindung. Die Einrichtung 10 umfasst einen Akkumulator 12 mit einer Vielzahl, im Beispiel vier, galvanischen Zellen 14-1, 14-2, 14-3, 14-4 und den Akkumulatorpolen 38 (38+, 38-), sowie ein Betriebsmanagementsystem 16.

Das Betriebsmanagementsystem 16 umfasst folgendes: eine Zentralsteuereinrichtung (CPU, Englisch: Central Processing Unit) 18, eine Programmspeichereinrichtung (P-S) 20 zum Speichern von Algorithmen bzw. Rechenvorschriften zur Steuerung der Einrichtung 10 in der Form von Programmen und Unterprogrammen, eine Datenspeichereinrichtung (D-S) 22 zum Speichern von Parametern zur Charakterisierung eines elektrischen Betriebszustands der Einrichtung und den Zeitabhängigkeiten dieser Parameter zur Charakterisierung der Betriebsvergangenheit der Einrichtung, eine Stromumschalteinrichtung bzw. - multiplexer (I-MUX) 24 zum gezielten bzw. zellenspezifischen Beaufschlagen eines Ladestroms auf eine jeweilige galvanische Zelle 14-1, 14-2, 14-3, 14-4 über eine jeweilige Stromleitung 30-1, 30-2, 30-3, 30-4 bzw. 30-5, einen Stromschaltsignalumschalteinrichtung bzw. -multiplexer (S-MUX) 26 zum Multiplexen und Übertragen von Stromschaltsignalen zwischen der Stromschaltsignalumschalteinrichtung und jeweiligen, den galvanischen Zellen 14-1, 14-2, 14-3, 14-4 zugeordneten Stromschalteinrichtungen 34-1, 34-2, 34-3 und 34-4, sowie eine Temperaturmesssignalumschalteinrichtung bzw. -multiplexer (T-MUX) 28 zum gezielten bzw. adressierbaren Ansprechen von Temperaturmesseinrichtungen 56, 58, 60, 62 und zum Lesen bzw. Übertragen von Temperaturmesssignalen, die von den Temperatursensoren 56, 58, 60, 62 ausgegeben werden, über entsprechende, die Temperatursensoren und die Temperaturmesssignalumschalteinrichtung 28 verbindende Temperaturmesssignalleitungen 36.

Der Akkumulator 12 umfasst mindestens eine, zwei, drei, im vorliegenden Beispiel vier oder mehrere galvanische Zellen 14-1, 14-2, 14-3, 14-4, die elektrisch in Serien- bzw. Parallelschaltung miteinander verschaltet sind, um eine gewünschte Gesamtspannung bzw. eine gewünschte Gesamtkapazität (Gesamtentladestrom) an den Polen 38+, 38- des Akkumulators bereitzustellen. Dazu sind die galvanischen Zellen 14-1, 14-2, 14-3, 14-4 des Akkumulators 12 im Wesentlichen baugleich ausgeführt.

In der in Fig. 1 gezeigten Ausführungsform sind vier galvanische Zellen 14-1, 14-2, 14-3, 14-4 hintereinander geschaltet, so dass zwischen den Polen 38+, 38- des Akkumulators 12 das vierfache einer Einzelspannung einer galvanischen Zelle als Gesamtspannung des Akkumulators 12 bereitgestellt wird. Bei einer elektrischen Serienschaltung von galvanischen Zellen addieren sich die Ausgangsspannungen der einzelnen Zellen zur Gesamtspannung der in Serie geschalteten galvanischen Zellen. Bei einer Parallelschaltung von galvanischen Zellen addieren sich die Kapazitäten (bzw. Entladeströme) der parallel geschalteten galvanischen Zellen zu einer Gesamtkapazität (bzw. einen Gesamtentladestrom) entsprechend der Anzahl der parallel geschalteten galvanischen Zellen. Es ist auch möglich, mehrere Anordnungen von jeweils hintereinander bzw. in Serie geschalteten galvanischen Zellen in Parallelschaltung miteinander zu verbinden und somit als Gesamtspannung ein Vielfaches der Einzelspannung einer galvanischen Zelle und als Gesamtkapazität ein Vielfaches der Einzelkapazität einer galvanischen Zelle zu erhalten.

Eine jeweilige galvanische Zelle 14-1, 14-2, 14-3, 14-4 umfasst ein Zellengehäuse 40, einen Zellengehäusedeckel 41, eine negative Elektrode bzw. Kathode 42 mit einem Kathodenpol 44, einem Kathodenstromableiter 46, einer Kathodenaktivschicht 48, eine positive Elektrode bzw. Anode 43 mit einem Anodenpol 45, einem Anodenstromableiter 50 und einer Anodenaktivschicht 52, einem Separator mit Elektrolyt 54 zum Herstellen einer elektrochemischen Wirkverbindung zwischen der Kathodenaktivschicht 48 und der Anodenaktivschicht 52, sowie mindestens einen Temperatursensor, der ausgewählt ist aus einer Gruppe, die folgendes umfasst: einen Sensor 56 zum Messen einer Temperatur der Kathode 44, einen Sensor 58 zum Messen einer Temperatur der Anode 45, einen Sensor 60 zum Messen einer Temperatur des Elektrolyts 54, einen Sensor 62 zum Messen einer Temperatur der galvanischen Zelle. Die Kathodentemperatursensor 56 ist in wärmeleitender Kommunikation mit dem Stromableiter 46 und der Aktivschicht 48 der Elektrode und ist an einem aus dem Zellengehäusedeckel 42 herausragenden Bereich des Kathodenpols 44 angeordnet. Der so angeordnete Kathodentemperatursensor 56 misst eine für die Temperatur der Kathode repräsentative Temperatur. Der Anodentemperatursensor 58 ist in wärmeleitender Kommunikation mit dem Stromableiter 50 und der Aktivschicht 52 der Anode und ist an einem aus dem Zellengehäusedeckel 42 herausragenden Teil des Anodenpols 45 angeordnet. Der so angeordnete Anodentemperatursensor 58 misst eine für die Temperatur der Anode 43 repräsentative Temperatur. Der Elektrolyttemperatursensor 60 ist im Inneren des Gehäuses 40 in wärmeleitender Kommunikation mit dem Elektrolyten 54 und möglichst weit entfernt von sowohl der Kathode als auch der Anode, vorzugsweise in gleicher Entfernung zur Anode 43 als auch zur Kathode 42, insbesondere in der in Fig. 1 gezeigten Ausführungsform am Boden des Gehäuses 40 angeordnet. Der Elektrolyttemperatursensor 60 misst eine für die Temperatur des Elektrolyten repräsentative Temperatur. Der Zellentemperatursensor 62 ist in wärmeleitender Kommunikation mit der galvanischen Zelle 17 angeordnet ist, insbesondere in der in Fig. 1 gezeigten Ausführungsform an einer Außenseite des Gehäuses 40 und vorzugsweise in im Wesentlichen gleicher Entfernung zur Anode 43 und zur Kathode 42angeordnet. Der Zellentemperatursensor 62 steht nicht mit einer der Elektroden 42 bzw. 43 oder dem Elektrolyten 54 in direkter wärmeleitender Kommunikation, sondern misst eine gemittelte, für die Zelle repräsentative Temperatur.

Ein jeweiliger in der galvanischen Zelle 14-1 angeordnete Temperatursensor, d.h. der Kathodentemperatursensor 56-1, der Anodentemperatursensor 58-1, der Elektroniktemperatursensor 60-1 und der Zellentemperatursensor 62-1 ist über eine entsprechende Temperaturmesssignalleitung 36-1, 36-2, 23-3, 36-4 mit dem Temperaturmesssignalumschalter 28 des Betriebsmanagementsystems 16 verbunden. Ein jeweiliges von einem der Temperaturmesssensoren 56, 58, 60, 62 erzeugtes Signal ist eine elektrische Spannung oder ein elektrischer Strom, die/der über einen geeigneten Analog-Digital-Wandler (nicht gezeigt) in ein digitales Signal umgewandelt wird und über den Temperaturmesssignal-Multiplexer 28 in die Zentralsteuereinheit 18 übertragen wird. Dort wird das Messsignal in einen Temperaturwert umgerechnet und kann in der Datenspeichereinrichtung 22 zur späteren Auswertung gespeichert werden. Die Analog-/Digitalwandler (nicht gezeigt) für die Temperaturmesssignale können in den Temperatursensoren 56, 58, 60, 62 oder in der Temperaturmesssignalumschalteinrichtung 28 integriert sein oder gesondert bereitgestellt sein.

Zur genaueren thermischen Charakterisierung einer jeweiligen galvanischen Zelle 14-1, 14-2, 14-3, 14-4 kann eine jeweilige Zelle nicht nur einen, sondern mehrere an verschiedenen Positionen angeordnete bzw. mit verschiedenen Elementen der galvanischen Zelle in wärmeleitender Kommunikation stehende Sensoren, insbesondere von den oben erläuterten Typen 56, 58, 60 und 62, umfassen. Einer jeweiligen galvanischen Zelle 14-1, 14-2, 14-3, 14-4 ist ein Bündel von Temperaturmesssignalleitungen 36-1, 36-2, 36-3, 36-4 zugeordnet, die vermittels eines Bussystems 36 in elektrisch leitender Verbindung mit dem Temperaturmesssignalumschalteinrichtung 28 sind.

Vermittels des Strommultiplexers 24 kann der Ladestrom einer jeweiligen galvanischen Zelle 14-1, 14-2, 14-3, 14-4 individuell, gruppenweise oder kollektiv auf eine einzelne galvanische Zelle, eine ausgewählte Gruppe von galvanischen Zellen oder die Gesamtheit der galvanischen Zellen beaufschlagt werden. Dazu ist der Kathodenpol 44-1 der Kathode 42-1 einer ersten galvanischen Zelle 14-1 über einen Stromleiter mit einem externen Pol 38, genauer mit dem negativen Pol 38-, des Akkumulators 12 und über eine vermittels einer Stromschalteinrichtung 34-1 schaltbare Stromleitung 30-1 mit der Stromumschalteinrichtung 24 verbunden. Der Anodenpol 45-1 der ersten galvanischen Zelle 14-1 ist über eine vermittels der Stromschalteinrichtung 34-2 schaltbare Stromleitung mit dem Kathodenpol 44-2 der zweiten galvanischen Zelle 14-2 und über eine Stromleitung 30-2 mit der Stromumschalteinrichtung 24 verbunden. Der Anodenpol 45-2 der zweiten galvanischen Zelle 14-2 ist über eine vermittels der Stromschalteinrichtung 34-3 schaltbare Stromleitung mit dem Kathodenpol 44-3 der dritten galvanischen Zelle 14-3 und über eine Stromleitung 30-3 mit der Stromumschalteinrichtung 24 verbunden. Der Anodenpol 45-3 der dritten galvanischen Zelle 14-3 ist über eine vermittels der Stromschalteinrichtung 34-4 schaltbare Stromleitung mit dem Kathodenpol 44-4 der vierten galvanischen Zelle 14-4 und über eine Stromleitung 30-4 mit der Stromumschalteinrichtung 24 verbunden. Schließlich ist der Kathodenpol 44-4 der vierten galvanischen Zelle 14-4 über eine vermittels der Stromschalteinrichtung 34-5 schaltbare Stromleitung mit dem Anodenpol 38+ des Akkumulators 12 und über eine Stromleitung 30-5 mit der Stromumschalteinrichtung 24 verbunden.

Eine jeweilige Strommesseinrichtung 34-1, 34-2, 34-3, 34-4, 34-5 ist über eine Stromschaltsignalleitung 32-1, 32-2, 32-3, 32-4 bzw. 32-5 mit der Stromschaltsignalumschalteinrichtung 26 verbunden und gezielt umschaltbar zwischen einem geschlossenen bzw. stromleitenden und einem offenen bzw. den Strom unterbrechenden Zustand.

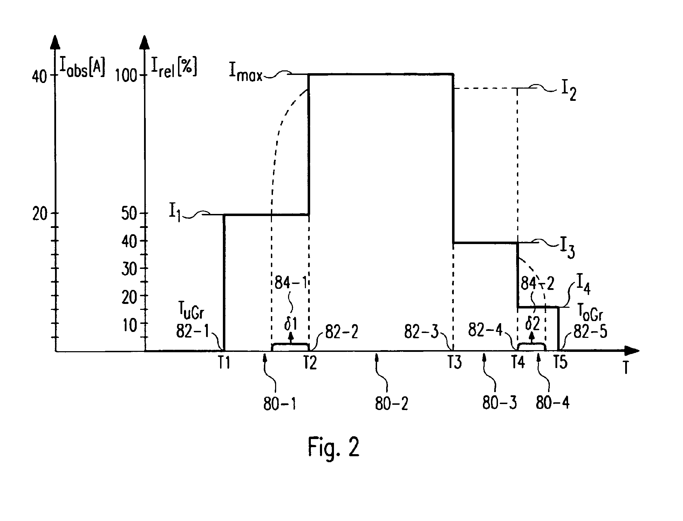

Wenn beispielsweise die Stromschalteinrichtung 34-1 über die Stromsignalschaltleitung 32-1 in einen geschlossenen Zustand und die Stromschalteinrichtung 34-2 über die Stromsignalschaltleitung 32-2 in einen geöffneten Zustand geschaltet wird, dann kann ein Ladestrom für die erste galvanische Zelle 14-1 durch geeignete entsprechende Schaltung bzw. Adressierung durch die Stromumschalteinrichtung 24 gezielt und hinsichtlich der Stärke geregelt, über die Stromleitung 30-2, durch die galvanische Zelle 14-1 und die Stromleitung 30-1 der ersten galvanischen Zelle 14-1 beaufschlagt werden. Wenn die Stromschalteinrichtung 34-3 über die Stromschaltsignalleitung 32-3 in einen geöffneten Zustand und die Stromschalteinrichtung 34-2 über die Stromschaltsignalleitung 30-2 in einen geschlossenen bzw. stromleitenden Zustand geschaltet wird, dann kann ein Ladestrom für die zweite galvanische Zelle 14-2 durch geeignete Adressierung und Schaltung durch die Stromumschalteinrichtung 24 über die Stromleitung 30-2 und durch die Stromschalteinrichtung 34-2 zum Kathodenpol 44-2 der zweiten galvanischen Zelle 14-2, durch die zweite galvanische Zelle 14-2, deren Anodenpol 45-2 und die Stromleitung 30-3 gezielt und hinsichtlich der Stärke geregelt der zweiten galvanischen Zelle 14-2 beaufschlagt werden. Entsprechend kann für eine jeweilige galvanische Zelle der Ladestrom gezielt adressiert und hinsichtlich der Stärke geregelt beaufschlagt werden. Durch geeignete Ansteuerung der Stromschaltsteuereinrichtungen 34-1 bis 34-5 kann ein Ladestrom auch gezielt seriell durch zwei, drei oder alle, insbesondere in der Fig. 2 vier galvanischen Zellen 14-1, 14-2, 14-3, 14-4 beaufschlagt werden.

Die beaufschlagten Ladeströme, die damit beaufschlagten galvanischen Zellen und die Zeitpunkte können erfasst und in der Datenspeichereinrichtung 22 zur Charakterisierung der Ladevergangenheit der einzelnen galvanischen Zellen gespeichert werden.

Wenn alle Stromschalteinrichtungen 34-1 bis 34-5 im geschlossenen bzw. stromleitenden Zustand sind, dann kann zwischen den Polen 38'- und 38'+ des Akkumulators 12 ein Gesamtentladestrom der galvanischen Zellen bereitgestellt werden. Der Entladestrom kann durch geeignete Messvorrichtungen erfasst und zusammen mit den jeweiligen Messzeitpunkten zur Erfassung der Entladevergangenheit ebenfalls in der Datenspeichereinrichtung 22 gespeichert werden.

Ebenso wie die einzelnen galvanischen Zellen oder Gruppen von galvanischen Zellen gezielt mit einem Ladestrom beaufschlagt werden können, können für ausgewählte galvanische Zellen oder Gruppen von galvanischen Zellen die elektrische Kapazität, die zwischen den beiden Polen messbare elektrische Spannung im Leerlauf oder eine lastabhängige Klemmenspannung, der Innenwiderstand, mit dem die galvanische Zelle behaftet ist, die bereits geladene oder verfügbare elektrische Ladung der ausgewählten Zelle oder Gruppe von Zellen, Leckströme zwischen den Polen innerhalb der galvanischen Zelle oder von Zelle zu Zelle in der ausgewählten Gruppe von Zellen gemessen und zusammen mit den jeweiligen Messzeitpunkten erfasst und in der Datenspeichereinrichtung 22 des Betriebsmanagementsystems 16 zur späteren Auswertung gespeichert werden. Auf diese Weise kann die Vergangenheit der elektrischen Betriebszustände des Akkumulators 12 einschließlich des elektrischen Betriebszustands einer jeweiligen galvanischen Zelle 14-1 bis 14-4 in dem Akkumulator 12 durch das Betriebsmanagementsystem 16 erfasst werden.

Aus den erfassten Lade- bzw. Entladevergangenheiten lassen sich abgeleitete Größen, wie etwa die dem Fachmann als aktueller Ladezustand (Englisch: State Of Charge, SOC) und aktueller Gesundheitszustand (Englisch: State Of Health, SOH) bekannten Größen berechnen. In letzterem ist beispielsweise die kalendarische Alterung ebenso wie eine während Betriebsdauer aufgetretene Tiefentladung oder Überladung, die den allgemeinen (Gesundheits)-Zustand einer galvanischen Zelle kennzeichnen berücksichtigt und dieser kann ebenfalls zur Steuerung des elektrischen Betriebszustands verwendet werden.

Fig. 2 zeigt schematisch ein Beispiel für eine temperaturabhängige Steuerung des elektrischen Betriebszustands, genauer gesagt für einen Parameter des elektrischen Betriebszustands, nämlich insbesondere beispielsweise den Ladestrom des Akkumulators 12. Die im Folgenden beschriebene temperaturabhängige Regelung des Ladestroms kann für eine jeweilige galvanische Zelle, ausgewählte Gruppen von galvanischen Zellen oder für die Gesamtheit der galvanischen Zellen angewendet werden. Eine derartige temperaturabhängige Regelung kann beispielsweise auch für die Entladeströme von einzelnen galvanischen Zellen, von ausgewählten Gruppen von galvanischen Zellen oder für die Gesamtheit der galvanischen Zellen verwendet werden.

Wie in Fig. 2 gezeigt, wird ein zulässiger Bereich der Betriebstemperatur der galvanischen Zellen des Akkumulators durch Temperaturgrenzwerte T1 (82-1), T2 (82-2), T3 (82-3), T4 (82-4) und T5 (82-5) in mehrere Temperaturintervalle unterteilt. Der Temperaturgrenzwert T1 (82-1) ist gleichzeitig die untere Temperaturgrenze T_{uGr} des zulässigen Bereichs der Betriebstemperatur der galvanischen Zellen. Der Temperaturgrenzwert T5 (82-5) ist gleichzeitig die Obergrenze T_{oGr} für den zulässigen Bereich von Betriebstemperaturen. Dementsprechend bewirkt das Betriebsmanagementsystem 16, dass für Temperaturen unterhalb der unteren und oberhalb der oberen Temperaturgrenze T_{uGr} bzw. T_{uGr} der Ladestrom im wesentlichen Null ist bzw. dass die galvanischen Zellen nicht betrieben (geladen oder entladen) werden können. Dazu kann das Betriebsmanagementsystem 16 bewirken, dass die Pole 38+, 38- des Akkumulators 12 mit daran angeschlossenen Verbrauchern durch Umschalten der Stromschalteinrichtungen 34-1 und 34-5 in den nicht Strom leitenden Zustand elektrisch von den galvanischen Zellen abgetrennt werden.

In einem mittleren Temperaturintervall im zulässigen Betriebstemperaturbereich, insbesondere , wie in Fig. 2 gezeigt in dem Temperaturintervall zwischen dem zweiten Temperaturgrenzwert T2 (82-2) und dem dritten Temperaturgrenzwert T3 (82-3), ist der Maximalwert für den Ladestrom einer jeweiligen galvanischen Zelle auf einen maximal zulässigen bzw. beaufschlagbaren Ladestrom Iₘₐₓ begrenzt. Dies ist in Fig. 2 dadurch angedeutet, dass der Wert Iₘₐₓ für den Ladestrom im zweiten Temperaturintervall 80-2 zwischen dem zweiten Temperaturgrenzwert T2 (82-2) und dem dritten Temperaturgrenzwert T3 (82-3) auf der relativen Stromskala "Iᵣₑₗ" auf 100 % gesetzt ist. Auf der in Fig. 2 gezeigten absoluten Stromskala "I_{abs}" entspricht dies einem Ladestrom von beispielsweise 40 Ampere für einen Akkumulator bzw. eine entsprechend seriell und parallel geschaltete Gruppe von galvanischen Zellen.

In dem ersten Temperaturintervall 80-1 zwischen dem ersten Temperaturwert T1 (82-1) und dem zweiten Temperaturgrenzwert T2 (82-2) ist der Sollwert I₁ für den Ladestrom auf einen niedrigeren Wert, im wesentlichen 50 % des für das zweite Temperaturintervall 80-2 festgelegten, maximalen Ladestromwerts Iₘₐₓ festgelegt.

In dem dritten Temperaturintervall 80-3 zwischen dem dritten Temperaturgrenzwert T3 (82-3) und dem vierten Temperaturgrenzwert T4 (82-4) ist der Wert I₃ für den Ladestrom auf 90 % des Maximalwerts (100%) des Ladestroms im zweiten Temperaturintervall (80-2) festgelegt. Statt des vorgegebenen Sollwerts I₃ kann der Ladestrom im dritten Temperaturintervall 80-3 auch in Abhängigkeit vom zeitlichen Verlauf des elektrischen Betriebszustands, insbesondere des Lade- bzw. Gesundheitszustands, der galvanischen Zellen, auch auf einen Bereich zwischen einem unteren Ladestromwert (in Fig. 2: 40 % von Iₘₐₓ) und einer oberen Grenze, insbesondere den Ladestromwert I₃ (in Fig. 2: 90 % Iₘₐₓ) begrenzt sein. In ähnlicher Weise können auch in anderen Temperaturintervallen, z.B. dem Temperaturintervall 80-1 und dem Temperaturintervall 80-4, mit Ausnahme des Temperaturintervalls 80-2, in dem der maximale Ladestromsollwert Iₘₐₓ (100 %) festgelegt ist, Untergrenzen und Obergrenzen für den Ladestrom festgelegt werden.

In dem vierten Temperaturintervall 80-4 zwischen dem vierten Temperaturgrenzwert T4 (82-4) und dem fünften Temperaturgrenzwert T5 (82-5) ist der Ladestrom auf einen vierten Ladestromwert I₄ (in Fig. 2 beispielsweise 15% Iₘₐₓ), der kleiner als der obere Ladestromwert I₃ im dritten Temperaturintervall 80-3 ist, festgelegt.

Zur Schonung der Elektroden, insbesondere der Anode ist bei Temperaturgrenzwerten, wo gemäß den bisher erläuterten Regelvorschriften ein Sprung bzw. eine Diskontinuität des vorgegebenen Ladestroms auftritt, ein Temperaturübergangsintervall festgelegt, in dem der Ladestrom auf Zwischenwerte zwischen den Ladestromwerten für Temperaturen oberhalb des betroffenen Temperaturgrenzwerts und Ladestromwerten für Temperaturen unterhalb des betroffenen Temperaturgrenzwerts geregelt wird. In Fig. 2 sind beispielsweise ein erstes Temperaturübergangsintervall 84-1 mit der Temperaturbreite δ1 unterhalb angrenzend an den zweiten Temperaturgrenzwert T2 (82-2) und ein zweites Temperaturübergangsintervall 84-2 mit der Temperaturbreite δ2 oberhalb angrenzend an den Temperaturgrenzwert T4 (82-4) gezeigt. In dem ersten bzw. zweiten Temperaturübergangsintervall 84-1 bzw. 84-2 sind ein oder mehrere Zwischenwerte für den Ladestrom zwischen dem Ladestromwert unterhalb des betroffenen Temperaturgrenzwerts und dem Ladestromwert oberhalb des betroffenen Temperaturgrenzwerts festgelegt, wie in Fig. 2 durch die gekrümmten gestrichelten Linien in den Temperaturübergangsintervallen 84-1 und 84-2 angedeutet.

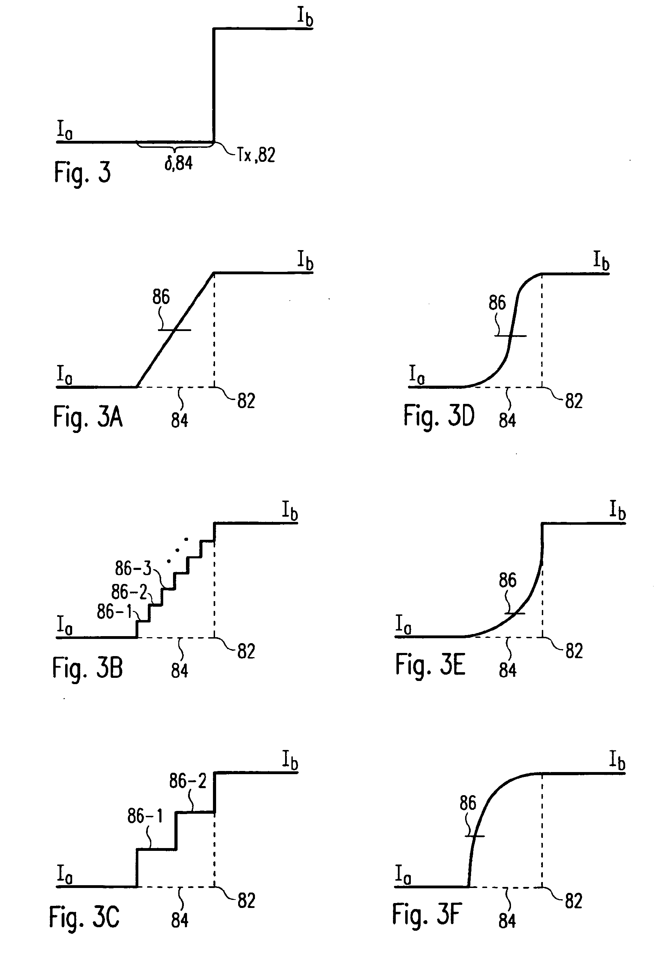

Fig. 3 zeigt schematisch eine an einem Temperaturgrenzwert Tx (82) auftretende Diskontinuität bzw. einen Sprung zwischen einem Ladesollwert Iₐ in einem Temperaturintervall unterhalb eines Temperaturgrenzwerts Tx (mit x = 1, 2, ... 5) und einem Ladestromwert I_{b} in einem Temperaturintervall oberhalb angrenzend an den Temperaturgrenzwert Tx sowie ein dem Temperaturgrenzwert Tx zugeordnetes, im Beispiel der Fig. 3 unterhalb angrenzend gezeigtes, Temperaturübergangsintervall 84 mit der Temperaturbreite δ. Die Figuren 3A bis 3F zeigen verschiedene Beispiele dafür, wie in dem Temperaturübergangsintervall 84 mindestens ein Zwischenwert 86 bzw. zwei (86-1, 86-2) oder mehrere Zwischenwerte festgelegt werden können. Fig. 3A zeigt, dass der Regelstromsollwert im Temperaturübergangsintervall 84 von dem Regelstromsollwert Iₐ am einen (in Fig. 3A linken) Ende des Übergangsintervalls 84 kontinuierlich und linear mit der Temperatur veränderlich übergeht zum Sollwert I_{b} in dem Temperaturintervall am anderen (in Fig. 3A rechten) Ende des Übergangsintervalls 84 bzw. oberhalb des Temperaturgrenzwerts Tx. Fig. 3B zeigt, dass in dem Übergangsintervall 84 der Sollwert in der grafischen Darstellung treppenartig über mehrere Zwischenwerte 86-1, 86-2, 86-3 ... vom Regelwert Iₐ zum Regelwert I_{b} übergeht. Fig. 3C zeigt, dass der Sollwert, in Vereinfachung der Regelvorschrift der Fig. 3B, über zwei Zwischenwerte 86-1, 86-2 vom Sollwert Iₐ zum Sollwert I_{b} übergeht. Fig. 3D zeigt, dass der Regelsollwert in dem Übergangsintervall 84 kontinuierlich in einer in der grafischen Darstellung S-förmigen Temperaturabhängigkeit vom Regelsollwert Iₐ am einen Ende zum Regelsollwert I_{b} am anderen Ende des Übergangsintervalls 84 übergeht. Fig. 3E zeigt, dass der Sollwert im Übergangsintervall 84 kontinuierlich und monoton steigend in einer in der grafischen Darstellung linksgekrümmten Kurve bzw. Temperaturabhängigkeit vom Regelsollwert Iₐ zum Regelsollwert I_{b} übergeht. Und schließlich zeigt Fig. 3F, dass der Sollwert im Übergangsintervall 84 kontinuierlich und monoton steigend in einer in der grafischen Darstellung rechtsgekrümmten Kurve vom Regelsollwert Iₐ zum Regelsollwert I_{b} übergeht.

In den Figuren 3, und den Figuren 3A bis 3D ist das Übergangsintervall 84 unterhalb angrenzend an den Temperaturgrenzwert Tx gezeigt. Es kann sich jedoch auch oberhalb angrenzend an den Temperaturgrenzwert Tx erstrecken, wie das in Fig. 2 beispielhaft für das sich oberhalb des vierten Temperaturgrenzwerts T4 (82-4) erstreckende Temperaturübergangsintervall 84-2 gezeigt ist.
In der vorhergehenden Beschreibung der in Fig. 2 und den Figuren 3, 3A bis 3F gezeigten Regelvorschriften war der Regelwert beispielhaft ein Regelstromwert. Dies kann allgemein ein Regeistromwert für eine einzelne, beliebig ausgewählte galvanische Zelle, eine ausgewählte Gruppe von galvanischen Zellen oder auch kollektiv für die Gesamtheit der galvanischen Zellen sein. Die Regelvorschriften in den Figuren 2 und 3A bis 3F können auch auf einen Entladestrom angewendet werden, wobei die Stromwerte dann Strombegrenzungen für den Entladestrom darstellen. Die Regelvorschriften in den Figuren 2 und 3A bis 3F lassen sich auch auf Ladespannungen und Entladespannungen anwenden.

In den Figuren 3, 3A bis 3F weist ein Temperaturübergangsintervall 84 eine Temperaturbreite 8 auf, die kleiner ist als die Breite des Temperaturintervalls, in dem sich das Temperaturübergangsintervall erstreckt. Es ist jedoch auch möglich, die Breite δ des Temperaturübergangsintervalls 84 gleich groß festzulegen wie die Breite des Temperaturintervalls, in dem sich das Übergangsintervall 84 erstreckt. So kann eine über ein oder mehrere Temperaturintervalle und schließlich sogar über den gesamten zulässigen Betriebstemperaturbereich kontinuierlich festgelegte, temperaturabhängige Regelvorschrift verwirklicht werden.

Die Temperaturintervallgrenzen und die jeweiligen, in den Temperaturintervallen festgelegten Temperaturabhängigkeiten (Regelvorschriften) für die Regelwerte für den den elektrischen Betriebszustand einer jeweiligen Zelle erfindungsgemäß temperaturabhängig zu regelnden Parameter sind in einer Speichereinheit, insbesondere in der Datenspeichereinheit 22, des Betriebsmanagementsystems 16 hinterlegt und können durch geeignete Softwareaktualisierungen an einen jeweiligen Akkumulatortyp oder auch an eine bestimmte Betriebszustandsvergangenheit angepasst werden.

## Patentansprüche

1. Verfahren zum Überwachen und Steuern eines elektrischen Betriebszustands einer nach galvanischen Prinzipien arbeitenden Einrichtung (10), mit mindestens einer galvanischen Zelle (14-1), insbesondere einer Lithium-Ionen-Zelle, mit den Schritten:
(1) Überwachen der Stärke eines zur Entladung der Zelle führenden elektrischen Stroms, nachfolgend Entladestrom genannt, der Einrichtung,
(2) Überwachen einer Temperatur der Einrichtung, und
(3) Steuern des Entladestroms der mindestens einen Zelle, In Abhängigkeit von der Temperatur,
wobei Schritt 3 umfasst:
- Festlegen eines ersten Temperaturgrenzwerts (82-1, T₁), eines zweiten Temperaturgrenzwerts (82-2, T₂), der größer als der erste Temperaturgrenzwert (T₁) ist, eines dritten Temperaturgrenzwerts (82-3, T₃), der größer als der zweite Temperaturgrenzwert (T₂) ist, sowie eines vierten Temperaturgrenzwerts (82-4, T₄), der größer als der dritte Temperaturgrenzwert (T₃) ist,
- Begrenzen des Entlade-Sollstroms der mindestens einen galvanischen Zelle (14-1, 14-2, 14-3, 14-4) im Temperaturintervall (80-2) zwischen dem zweiten und dritten Temperaturgrenzwert (T₂, T₃) auf einen maximalen Entlade-Stromwert (Iₘₐₓ),
- Begrenzen des Entlade-Sollstroms der mindestens einen galvanischen Zelle (14-1, 14-2, 14-3, 14-4) im Temperaturintervall (80-1) zwischen dem ersten und zweiten Temperaturgrenzwert (T₁, T₂) auf einen ersten Entlade-Stromwert (I₁), der kleiner als der maximale Entlade-Stromwert (Iₘₐₓ) im Temperaturintervall (80-2) zwischen dem zweiten und dritten Temperaturgrenzwert (T₂, T₃) ist,
- Begrenzen des Entlade-Sollstroms der mindestens einen galvanischen Zelle (14-1, 14-2, 14-3, 14-4) im Temperaturintervall (80-3) zwischen dem dritten und vierten Temperaturgrenzwert (T₃, T₄) auf einen zweiten Entladestromwert (I₂), der ebenfalls kleiner als der maximale Entlade-Stromwert (Iₘₐₓ) im Temperaturintervall (80-2) zwischen dem zweiten und dritten Temperaturgrenzwert (T₂, T₃) ist.

2. Verfahren nach dem vorhergehenden Anspruch, **dadurch gekennzeichnet, dass** Schritt (2) einen Schritt des Erfassens der Temperatur der Einrichtung unter Benutzung einer Temperaturmesseinrichtung zum Messen einer Temperatur der Einrichtung umfasst.

3. Verfahren nach einem der vorhergehenden Ansprüche, **dadurch gekennzeichnet, dass** Schritt (3) umfasst:
Steuern des elektrischen Betriebszustands der Einrichtung (10) auch in Abhängigkeit von einem vom Betriebsmanagementsystem ermittelten, für einen Ladezustand bzw. einen Gesundheitszustand der Einrichtung, insbesondere der galvanischen Zellen (14-1, 14-2, 14-3, 14-4) der Einrichtung, repräsentativen Parameter.

4. Verfahren nach einem der vorhergehenden Ansprüche, **dadurch gekennzeichnet, dass** Schritt (3) umfasst:
- Festlegen eines unteren Temperaturgrenzwerts (T_{uGr}) bzw. eines oberen Temperaturgrenzwerts (T_{oGr}),
- Bewirken, dass die Einrichtung (10) nicht betrieben wird, insbesondere die mindestens eine galvanische Zelle (14-1, 14-2, 14-3, 14-4) nicht geladen bzw. nicht entladen wird, wenn eine Temperatur der mindestens einen galvanischen Zelle (14-1, 14-2, 14-3, 14-4) unter dem unteren Temperaturgrenzwert (T_{uGr}) bzw. über dem oberen Temperaturgrenzwert (T_{oGr}) ist.

5. Verfahren nach Anspruch 4, **dadurch gekennzeichnet, dass** Schritt (3) ferner umfasst:
Begrenzen des Entlade-Sollstroms der mindestens einen galvanischen Zelle (14-1, 14-2, 14-3, 14-4) im Temperaturintervall (80-3) zwischen dem dritten und vierten Temperaturgrenzwert (T₃, T₄) auf einen dritten, minimalen Entlade-Stromwert (I₃), so dass der Entladestrom in diesem Temperaturintervall nicht kleiner als der minimale Entladestromwert (I₃) und nicht größer als der besagte zweite Entladestromwert (I₂) ist.

6. Einrichtung (10), die nach galvanischen Prinzipien arbeitet, wie insbesondere ein Akkumulator, insbesondere ein Lithium-Ionen-Akkumulator, mit mindestens einer galvanischen Zelle (14-1), insbesondere einer Lithium-Ionen-Zelle, einem Betriebsmanagementsystem (16) zum Überwachen und Steuern der Stärke eines zur Entladung der Zelle führenden elektrischen Stroms, nachfolgend Entladestrom genannt, der Einrichtung sowie zum Überwachen einer repräsentativen Temperatur der Einrichtung (10),
**dadurch gekennzeichnet, dass**
das Betriebsmanagementsystem dazu ausgebildet ist, den Entladestrom der Einrichtung in Abhängigkeit von der Temperatur zu steuern wobei die Einrichtung einen ersten Temperaturgrenzwert (82-1, T₁), einen zweiten Temperaturgrenzwert (82-2, T₂), der größer als der erste Temperaturgrenzwert (T₁) ist, einen dritten Temperaturgrenzwert (82-3, T₃), der größer als der zweite Temperaturgrenzwert (T₂) ist, und einen vierten Temperaturgrenzwert (82-4, T₄), der größer als der dritte Temperaturgrenzwert (T₃) ist, aufweist,
dass das Betriebsmanagementsystem (16) zu Folgendem ausgebildet ist:
- den Entlade-Sollstrom der mindestens einen galvanischen Zelle (14-1, 14-2, 14-3, 14-4) im Temperaturintervall (80-2) zwischen dem zweiten und dritten Temperaturgrenzwert (T₂, T₃) auf einen maximalen Entlade-Stromwert (Iₘₐₓ) zu begrenzen,
- den Entlade-Sollstrom der mindestens einen galvanischen Zelle (14-1, 14-2, 14-3, 14-4) im Temperaturintervall (80-1) zwischen dem ersten und zweiten Temperaturgrenzwert (T₁, T₂) auf einen ersten Entlade-Stromwert (I₁) zu begrenzen, der kleiner als der maximale Entlade-Stromwert (Iₘₐₓ) im Temperaturintervall (80-2) zwischen dem zweiten und dritten Temperaturgrenzwert (T₂, T₃) ist, so dass insbesondere I₁ ≤ x₁ x Iₘₐₓ und 0 < x₁ < 100% ist,
- den Entlade-Sollstrom der mindestens einen galvanischen Zelle (14-1, 14-2, 14-3, 14-4) im Temperaturintervall (80-3) zwischen dem dritten und vierten Temperaturgrenzwert (T₃, T₄) auf einen zweiten Entlade-Stromwert (I₂) zu begrenzen, der ebenfalls kleiner als der maximale Entlade-Stromwert (Iₘₐₓ) im Temperaturintervall (80-2) zwischen dem zweiten und dritten Temperaturgrenzwert (T₂, T₃) ist, so dass insbesondere I₂ ≤ x₂ x Iₘₐₓ und 0 < x₂ < 100% ist.

7. Einrichtung gemäß Anspruch 6, **gekennzeichnet durch** mindestens eine Temperaturmesseinrichtung (56, 58, 60, 62) zum Messen einer Temperatur der Einrichtung.

8. Einrichtung nach einem der Ansprüche 6 bis 7, **dadurch gekennzeichnet, dass** die Temperatur der Einrichtung eine Temperatur ist, die für die Temperatur einer Kathode (42), einer Anode (43) und/oder einen mit der Kathode bzw. Anode in elektrochemischer Wechselwirkung stehenden Elektrolyten (54) repräsentativ ist.

9. Einrichtung nach Anspruch 8, **dadurch gekennzeichnet, dass** die repräsentative Temperatur der Kathode (42) bzw. Anode (43) eine für die Temperatur des Stromableiters (46) der Kathode bzw. des Stromableiters (50) der Anode repräsentative Temperatur ist.

10. Einrichtung nach einem der Ansprüche 6 bis 9, **dadurch gekennzeichnet,**
**dass** die Einrichtung auch einen fünften Temperaturgrenzwert aufweist, der größer als der vierte Temperaturgrenzwert ist und zusammen mit dem vierten Temperaturgrenzwert ein viertes Temperaturintervall definiert,
**dass** das Betriebsmanagementsystem dazu ausgebildet ist, den Entladesollstrom der mindestens einen galvanischen Zelle im Temperaturintervall zwischen dem vierten und fünften Temperaturgrenzwert auf einen vierten Entladestrom (I₄) zu begrenzen, der kleiner als der maximale Entladestrom (Iₘₐₓ) im dritten Temperaturintervall zwischen dem dritten und vierten Temperaturgrenzwert ist.

11. Einrichtung nach einem der Ansprüche 6 bis 10, **dadurch gekennzeichnet, dass** der Parameter x₁ nicht größer als 90% und nicht kleiner als 30% ist, insbesondere ausgewählt ist aus einer Gruppe, die die Werte von im Wesentlichen 90%, 80%, 70%, 60%, 40% oder 30% umfasst.

## Claims

1. A method for monitoring and controlling an electrical operating state of a device (10) operating according to galvanic principles with at least one galvanic cell (14-1), in particular a lithium ion cell, comprising the steps of:
(1) monitoring the intensity of a current leading to the discharge of the cell of the device, which current from now on will be called discharge current,
(2) monitoring a temperature of the device, and
(3) controlling the discharge current of the at least one cell in dependence of the temperature,
wherein step 3 comprises:
- fixing a first temperature limit value (82-1, T₁), a second temperature limit value (82-2, T₂) which is greater than the first temperature limit value (82-1, T₁), a third temperature limit value (82-3, T₃) which is greater than the second temperature limit value (82-2, T₂), and a fourth temperature limit value (82-4, T₄), which is greater than the third temperature limit value (82-3, T₃),
- Limiting the discharge set current of the at least one galvanic cell (14-1, 14-2, 14-3, 14-4) in the temperature interval (80-2) between the second and third temperature limit values (T₂, T₃) to a maximum discharge current value (Iₘₐₓ),
- Limiting the discharge set current of the at least one galvanic cell (14-1, 14-2, 14-3, 14-4) in the temperature interval (80-1) between the first and second temperature limit value (T₁, T₂) to a first discharge current value (I₁), which is smaller than the maximum discharge current value (Iₘₐₓ) in the temperature interval (80-2) between the second and third temperature limit values (T₂, T₃),
- Limiting the discharge set current of the at least one galvanic cell (14-1, 14-2, 14-3, 14-4) in the temperature interval (80-3) between the third and fourth temperature limit value (T₃, T₄) to a second discharge current value (I₂), which is also smaller than the maximum discharge current value (Iₘₐₓ) in the temperature interval (80-2) between the second and third temperature limit values (T₂, T₃).

2. The method according to the preceding claim, **characterised in that** step (2) comprises a step of capturing the temperature of the device using a temperature measuring device for measuring a temperature of the device.

3. The method according to one of the preceding claims, **characterised in that** step (3) comprises:
Controlling the electrical operating state of the device (10) also in dependence of a parameter determined by the operating management system, which parameter is representative of a charging state or state of health of the device, in particular of the galvanic cells (14-1, 14-2, 14-3, 14-4) of the device.

4. The method according to one of the preceding claims, **characterised in that** step (3) comprises:
- fixing a lower temperature limit value (T_{uGr}) and an upper temperature limit value (T_{oGr})
- causing the device (10) not to be operated, in particular causing the at least one galvanic cell (14-1, 14-2, 14-3, 14-4) not to be charged or discharged, when a temperature of the at least one galvanic cell (14-1, 14-2, 14-3, 14-4) is below the lower temperature limit value (T_{uGr}) or above the upper temperature limit value (T_{oGr}).

5. The method according to claim 4, **characterised in that** step (3) further comprises:
Limiting the discharge set current of the at least one galvanic cell (14-1, 14-2, 14-3, 14-4) in the temperature interval (80-3) between the third and fourth temperature limit values (T₃, T₄) to a third minimum discharge current value (I₃) so that the discharge current in this temperature interval is not smaller than the minimum discharge current value (I₃) and not greater than the said second discharge set current value (I₂).

6. A device (10) operating according to galvanic principles, such as in particular an accumulator, in particular a lithium ion accumulator, with at least one galvanic cell (14-1), in particular a lithium ion cell, with an operating management system (16) for monitoring and controlling the intensity of an electrical current leading to the discharge of the cell, called discharge current in the following, of the device and for monitoring a representative temperature of the device (10),
**characterised in that**
the operating management system is designed to control the discharge current of the device in dependence of the temperature, where the device comprises a first temperature limit value (82-1, T₁), a second temperature limit value (82-2, T₂) greater than the first temperature limit value (T₁), a third temperature limit value (82-3, T₃) greater than the second temperature limit value (T₂) and a fourth temperature limit value (82-4, T₄) greater than the third temperature limit value (T₃),
the operating management system (16) is designed for the following:
- to limit the discharge current of at least one galvanic cell (14-1, 14-2, 14-3, 14-4) in the temperature interval (80-2) between the second and third temperature limit values (T₂, T₃) to a maximum discharge current value (Iₘₐₓ),
- to limit the discharge current of at least one galvanic cell (14-1, 14-2, 14-3, 14-4) in the temperature interval (80-1) between the first and second temperature limit values (T₁, T₂) to a first discharge current value (I₁), which is smaller than the maximum discharge current value (Iₘₐₓ) in the temperature interval (80-2) between the second and third temperature limit values (T₂, T₃) so that in particular I₁ ≤ x₁ x Iₘₐₓ and 0 < x₁ < 100%.
- to limit the discharge current of at least one galvanic cell (14-1, 14-2, 14-3, 14-4) in the temperature interval (80-3) between the third and fourth temperature limit values (T₃, T₄) to a second discharge current value (I₂), which is also smaller than the maximum discharge current value (Iₘₐₓ) in the temperature interval (80-2) between the second and third temperature limit values (T₂, T₃) so that in particular I₂ ≤ _{X2} x Iₘₐₓ and 0 < X₂ < 100%.

7. The device according to claim 6, **characterised by** at least one temperature measuring device (56, 58, 60, 62) for measuring a temperature of the device.

8. The device according to one of claims 6 to 7, **characterised in that** the temperature of the device is a temperature which is representative of the temperature of a cathode (42), an anode (43) and/or an electrolyte (54) electro-chemically interacting with the cathode or anode.

9. The device according to claim 8, **characterised in that** the representative temperature of the cathode (42) or anode (43) is a temperature representative of the temperature of the current collector (46) of the cathode or of the current collector (50) of the anode.

10. The device according to one of claims 6 to 9, **characterised in that** the device also comprises a fifth temperature limit value, which is greater than the fourth temperature limit value and together with the fourth temperature limit value defines a fourth temperature interval,
**in that** the operating management system is designed to limit the discharge set current of the at least one galvanic cell in the temperature interval between the fourth and fifth temperature limit values to a fourth discharge current (I₄), which is smaller than the maximum discharge current (Iₘₐₓ) in the third temperature interval between the third and fourth temperature limit values.

11. The device according to one of claims 6 to 10, **characterised in that** the parameter x1 is not greater than 90% and not smaller than 30%, in particular is selected from a group comprising the values of essentially 90%, 80%, 70%, 60%, 40% or 30%.

## Revendications

1. Procédé de surveillance et de commande d'un état de service électrique d'un dispositif (10) fonctionnant suivant des principes galvaniques, avec au moins une cellule galvanique (14-1), en particulier un accumulateur lithium-ion, comportant les étapes suivantes :
(1) surveillance de l'intensité d'un courant électrique conduisant au déchargement de la cellule du dispositif, ci-après désigné : courant de décharge,
(2) surveillance d'une température du dispositif, et
(3) commande du courant de décharge de la cellule ou des cellules, en fonction de la température,
l'étape 3 comprenant :
- la fixation d'une première valeur limite de température (82-1, T₁), d'une deuxième valeur limite de température (82-2, T₂) supérieure à la première valeur limite de température (T₁), d'une troisième valeur limite de température (82-3, T₃) supérieure à la deuxième valeur limite de température (T₂), ainsi que d'une quatrième valeur limite de température (82-4, T₄) supérieure à la troisième valeur limite de température (T₃),
- la limitation du courant de consigne de décharge de la cellule ou des cellules galvaniques (14-1, 14-2, 14-3, 14-4) dans l'intervalle de température (80-2) entre la deuxième et la troisième valeur limite de température (T₂, T₃) à une valeur maximale de courant de décharge (Iₘₐₓ),
- la limitation du courant de consigne de décharge de la cellule ou des cellules galvaniques (14-1, 14-2, 14-3, 14-4) dans l'intervalle de température (80-1) entre la première et la deuxième valeur limite de température (T₁, T₂) à une première valeur de courant de décharge (I₁) inférieure à la valeur maximale de courant de décharge (Iₘₐₓ) dans l' intervalle de température (80-2) entre la deuxième et la troisième valeur limite de température (T₂, T₃),
- la limitation du courant de consigne de décharge de la cellule ou des cellules galvaniques (14-1, 14-2, 14-3, 14-4) dans l'intervalle de température (80-3) entre la troisième et la quatrième valeur limite de température (T₃, T₄) à une deuxième valeur de courant de décharge (I₂) également inférieure à la valeur maximale de courant de décharge (Iₘₐₓ) dans l'intervalle de température (80-2) entre la deuxième et la troisième valeur limite de température (T₂, T₃).

2. Procédé selon la revendication précédente, **caractérisé en ce que** l'étape (2) comprend une étape de détection de la température du dispositif, en utilisant un dispositif de mesure de température destiné à mesurer une température du dispositif.

3. Procédé selon l'une des revendications précédentes, **caractérisé en ce que** l'étape (3) comprend :
la commande de l'état de service électrique du dispositif (10), également en fonction d'un paramètre déterminé par le système de gestion de fonctionnement, représentatif d'un état de charge ou un état de santé du dispositif, en particulier des cellules galvaniques (14-1, 14-2, 14-3, 14-4) du dispositif.

4. Procédé selon l'une des revendications précédentes, **caractérisé en ce que** l'étape (3) comprend :
- la fixation d'une valeur limite de température inférieure (T_{uGr}) ou d'une valeur limite de température supérieure (T_{oGr}),
- l'inhibition de la mise en service du dispositif (10), en particulier du chargement ou du déchargement de la cellule ou des cellules galvaniques (14-1, 14-2, 14-3, 14-4), si une température de la cellule ou des cellules galvaniques (14-1, 14-2, 14-3, 14-4) est inférieure à la valeur limite de température inférieure (T_{uGr}) ou est supérieure à la valeur limite de température supérieure (T_{oGr}).

5. Procédé selon la revendication 4, **caractérisé en ce que** l'étape (3) comprend en outre :
la limitation du courant de consigne de décharge de la cellule ou des cellules galvaniques (14-1, 14-2, 14-3, 14-4) dans l'intervalle de température (80-3) entre la troisième et la quatrième valeur limite de température (T₃, T₄) à une troisième valeur minimale de courant de décharge (I₃), si bien que le courant de décharge dans cet intervalle de température n'est pas inférieur à la valeur minimale de courant de décharge (I₃) et n'est pas supérieur à ladite deuxième valeur de courant de décharge (I₂).

6. Dispositif (10) fonctionnant suivant des principes galvaniques, tel qu'un accumulateur, en particulier un accumulateur lithium-ion, avec au moins une cellule galvanique (14-1), en particulier un accumulateur lithium-ion, un système de gestion de fonctionnement (16) destiné à surveiller et commander l'intensité d'un courant électrique conduisant au déchargement de la cellule du dispositif, ci-après désigné : courant de décharge, ainsi qu'à surveiller une température représentative du dispositif (10),
**caractérisé**
**en ce que** le système de gestion de fonctionnement est réalisé pour commander le courant de décharge du dispositif en fonction de la température,
le dispositif présentant une première valeur limite de température (82-1, T₁), une deuxième valeur limite de température (82-2, T₂) supérieure à la première valeur limite de température (T₁), une troisième valeur limite de température (82-3, T₃) supérieure à la deuxième valeur limite de température (T₂), et une quatrième valeur limite de température (82-4, T₄) supérieure à la troisième valeur limite de température (T₃),
**en ce que** le système de gestion de fonctionnement (16) est prévu pour ce qui suit :
- limiter le courant de consigne de décharge de la cellule ou des cellules galvaniques (14-1, 14-2, 14-3, 14-4) dans l'intervalle de température (80-2) entre la deuxième et la troisième valeur limite de température (T₂, T₃) à une valeur maximale de courant de décharge (Iₘₐₓ),
- limiter le courant de consigne de décharge de la cellule ou des cellules galvaniques (14-1, 14-2, 14-3, 14-4) dans l'intervalle de température (80-1) entre la première et la deuxième valeur limite de température (T₁, T₂) à une première valeur de courant de décharge (I₁) inférieure à la valeur maximale de courant de décharge (Iₘₐₓ) dans l'intervalle de température (80-2) entre la deuxième et la troisième valeur limite de température (T₂, T₃), de telle manière qu'en particulier I₁ ≤ x₁ x Iₘₐₓ et 0< x₁ < 100%,
- limiter le courant de consigne de décharge de la cellule ou des cellules galvaniques (14-1, 14-2, 14-3, 14-4) dans l'intervalle de température (80-3) entre la troisième et la quatrième valeur limite de température (T₃, T₄) à une deuxième valeur de courant de décharge (I₂) également inférieure à la valeur maximale de courant de décharge (Iₘₐₓ) dans l'intervalle de température (80-2) entre la deuxième et la troisième valeur limite de température (T₂, T₃), de telle manière qu'en particulier I₂ < x₂ x Iₘₐₓ et 0< x₂ < 100%.

7. Dispositif selon la revendication 6, **caractérisé par** au moins un dispositif de mesure de température (56, 58, 60, 62) destiné à mesurer une température du dispositif.

8. Dispositif selon la revendication 6 ou la revendication 7, **caractérisé en ce que** la température du dispositif est une température représentative de la température d'une cathode (42), d'une anode (43) et/ou d'un électrolyte (54) en interaction électrochimique avec la cathode ou l'anode.

9. Dispositif selon la revendication 8, **caractérisé en ce que** la température représentative de la cathode (42) ou de l'anode (43) est une température représentative de la température du dérivateur de courant (46) de la cathode ou du dérivateur de courant (50) de l'anode.

10. Dispositif selon l'une des revendications 6 à 9, **caractérisé en ce que** ledit dispositif présente aussi une cinquième valeur limite de température supérieure à la quatrième valeur limite de température et définissant un quatrième intervalle de température avec la quatrième valeur limite de température,
**en ce que** le système de gestion de fonctionnement est prévu pour limiter le courant de consigne de décharge de la cellule ou des cellules galvaniques dans l'intervalle de température entre la quatrième et la cinquième valeur limite de température à un quatrième courant de décharge (I₄) inférieur au courant de décharge maximal (Iₘₐₓ) dans le troisième intervalle de température entre la troisième et la quatrième valeur limite de température.

11. Dispositif selon l'une des revendications 6 à 10, **caractérisé en ce que** le paramètre x₁ n'est pas supérieur à 90 % et n'est pas inférieur à 30 %, et est notamment sélectionné dans un groupe comprenant essentiellement les valeurs de 90 %, 80 %, 70 %, 60 %, 40 % ou 30 %.
